(19) Europäisches Patentamt / European Patent Office / Office européen des brevets

(11) **EP 4 697 708 A1**

(12) **EUROPEAN PATENT APPLICATION**
published in accordance with Art. 153(4) EPC

(43) Date of publication:
**18.02.2026 Bulletin 2026/08**

(21) Application number: **24853222.8**

(22) Date of filing: **10.04.2024**

(51) International Patent Classification (IPC):
*H04N 19/159* *(2014.01)*

(52) Cooperative Patent Classification (CPC):
**H04N 19/159; H04N 19/177; H04N 19/189; H04N 19/91**

(86) International application number:
**PCT/CN2024/087050**

(87) International publication number:
**WO 2025/035806 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.08.2023 CN 202311030599**

(71) Applicant: **Huawei Technologies Co., Ltd.**
**Shenzhen, Guangdong 518129 (CN)**

(72) Inventors:
• **GE, Yunying**
**Shenzhen, Guangdong 518129 (CN)**
• **SHI, Yibo**
**Shenzhen, Guangdong 518129 (CN)**
• **HUANG, Yunqi**
**Shenzhen, Guangdong 518129 (CN)**
• **WANG, Jing**
**Shenzhen, Guangdong 518129 (CN)**

(74) Representative: **Eisenführ Speiser**
**Patentanwälte Rechtsanwälte PartGmbB**
**Johannes-Brahms-Platz 1**
**20355 Hamburg (DE)**

(54) **ENCODING METHOD, DECODING METHOD, AND ELECTRONIC DEVICE**

(57)     Embodiments of this application provide an encoding method, a decoding method, and an electronic device. The method includes: performing inter prediction on a coding unit in a current frame, to obtain first prediction information of the coding unit; determining residual information of the coding unit based on the first prediction information and an original picture of the coding unit; determining a preset parameter of the coding unit, where the preset parameter is used to fuse reconstructed picture information of a reference unit and reconstructed picture information of the coding unit, to obtain a target reconstructed picture of the coding unit, the reconstructed picture information of the reference unit includes a target reconstructed picture of the reference unit or feature information of the target reconstructed picture of the reference unit, and the reconstructed picture information of the coding unit includes an initial reconstructed picture of the coding unit or feature information of the initial reconstructed picture of the coding unit; and encoding the residual information, and encoding the preset parameter. In this way, an accumulated error can be reduced, and time sequence stability is ensured.

FIG. 3C-1

TO FIG. 3C-2          TO FIG. 3C-2   TO FIG. 3C-2

CONT.
FROM
FIG. 3C-1

CONT.
FROM
FIG. 3C-1

CONT.
FROM
FIG. 3C-1

Preset parameter

Original picture of a
reference frame

Encoding

Preset parameter bitstream

Fusion module

Target reconstructed picture
of the current frame

FIG. 3C-2

## Description

This application claims priority to Chinese Patent Application No. 202311030599.9, filed with the China National Intellectual Property Administration on August 15, 2023 and entitled "ENCODING METHOD, DECODING METHOD, AND ELECTRONIC DEVICE", which is incorporated herein by reference in its entirety.

## TECHNICAL FIELD

Embodiments of this application relate to the encoding and decoding field, and in particular, to an encoding method, a decoding method, and an electronic device.

## BACKGROUND

As videos develop from high definition videos to ultra high definition videos, people have higher requirements on video quality. In addition, the high definition video has a higher requirement on a bandwidth and storage. Correspondingly, in consideration of control over the bandwidth, a transmission delay, and storage costs, a video encoding requirement, namely, video compression is increasingly urgent.

An artificial intelligence (Artificial Intelligence, AI) video compression (or referred to as encoding and decoding) algorithm is implemented based on deep learning, and has better compression effect than conventional video compression technologies (for example, H265 and H266).

Because video frames are continuous in time, there is a small difference between a previous frame and a current frame. In other words, there is time redundancy between video frames. In view of this, inter encoding may be performed to reduce bitrate overheads. In an inter encoding process of AI video encoding, an error is introduced in many steps such as prediction and entropy encoding on residual information. In this way, in a process of encoding a group of pictures (Group of Pictures, GOP), an accumulated error continuously increases, and compression performance deteriorates accordingly as the accumulated error increases.

## SUMMARY

To resolve the foregoing technical problem, this application provides an encoding method, a decoding method, and an electronic device. This method can reduce an accumulated error to some extent and ensure time sequence stability (namely, ensure stability of compression performance of each frame in each GOP (the GOP is a group of pictures between I frames, and the I frame is an intra frame, namely, an intra-encoded frame)).

According to a first aspect, an embodiment of this application provides an encoding method. The method includes: performing inter prediction on a coding unit in a current frame, to obtain first prediction information of the coding unit; determining residual information of the coding unit based on the first prediction information and an original picture of the coding unit; determining a preset parameter of the coding unit, where the preset parameter is used to fuse reconstructed picture information of a reference unit and reconstructed picture information of the coding unit, to obtain a target reconstructed picture of the coding unit, the reconstructed picture information of the reference unit includes a target reconstructed picture of the reference unit or feature information of the target reconstructed picture of the reference unit, the reconstructed picture information of the coding unit includes an initial reconstructed picture of the coding unit or feature information of the initial reconstructed picture of the coding unit, the initial reconstructed picture of the coding unit and the feature information of the initial reconstructed picture of the coding unit are obtained through reconstruction based on the first prediction information and the residual information, and the reference unit is a unit in a reference frame corresponding to the current frame; and encoding the residual information, and encoding the preset parameter.

The preset parameter may be used to describe motion complexity of a picture of the coding unit relative to a picture of the reference unit. Specifically, the motion complexity may be a difference or a similarity. In other words, the motion complexity of the picture of the coding unit relative to the picture of the reference unit may be a similarity between the picture of the coding unit and the picture of the reference unit, or may be a difference between the picture of the coding unit and the picture of the reference unit. For example, a smaller difference or a larger similarity between the picture of the coding unit and the picture of the reference unit indicates lower motion complexity of the picture of the coding unit relative to the picture of the reference unit; and a larger difference or a smaller similarity between the picture of the coding unit and the picture of the reference unit indicates higher motion complexity of the picture of the coding unit relative to the picture of the reference unit.

In this application, the reconstructed picture information of the coding unit and the reconstructed picture information of the reference unit are fused based on the preset parameter, to generate the target reconstructed picture of the coding unit. In other words, the reconstructed picture information of the coding unit and the reconstructed picture information of the reference unit are fused based on a fusion rule (or a fusion policy or a fusion manner) corresponding to the motion complexity of the picture of the coding unit relative to the picture of the reference unit, to generate the target reconstructed picture of the coding unit. In this way, for a coding unit whose picture has low motion complexity relative to the picture of the reference unit, an error introduced by inter prediction and encoding of the residual information in a process of encoding the coding unit can be compensated for to some extent. Therefore, an error in the coding unit can be reduced to some extent, an error in the current frame can be further reduced to some extent, and compression performance of the current frame can be improved, thereby reducing an accumulated error in another subsequent frame to some extent, improving compression performance of the another subsequent frame, and ensuring time sequence stability. For a coding unit whose picture has high motion complexity relative to the picture of the reference unit, quality of the target reconstructed picture of the coding unit can be ensured, thereby ensuring quality of a target reconstructed picture of the current frame.

For example, an $i^{th}$ frame is used as an example to describe the accumulated error: An accumulated error in an $i^{th}$ frame of reconstructed picture may be an error introduced, in a process of encoding an $i^{th}$ frame of original picture, by an error between a reconstructed picture of a reference frame corresponding to the $i^{th}$ frame and an original picture of the reference frame corresponding to the $i^{th}$ frame. For example, in a GOP, a $2^{nd}$ frame of original picture is encoded based on the $1^{st}$ frame of reconstructed picture. Because an error is introduced in some steps in an encoding process, there is an error 1 between a $2^{nd}$ frame of reconstructed picture and the $2^{nd}$ frame of original picture. A $3^{rd}$ frame of original picture is encoded based on the $2^{nd}$ frame of reconstructed picture, and there is an error 2 between a $3^{rd}$ frame of reconstructed picture and the $3^{rd}$ frame of original picture. The error 2 includes an error 3 introduced by the error 1 in a process of encoding the $3^{rd}$ frame of original picture and an error 4 introduced in some steps of encoding the $3^{rd}$ frame of original picture. The error 3 may be referred to as an accumulated error.

For example, the residual information of the coding unit may be a first residual (the first residual may be a residual between feature information of the original picture of the coding unit (or the original picture of the coding unit) and the first prediction information of the coding unit) of the coding unit, or may be feature information of the first residual of the coding unit (the feature information of the first residual may also be referred to as a compressed feature of the first residual, and may be obtained by performing feature extraction on the first residual). This is not limited in this application. This application is described by using an example in which the residual information of the coding unit is the feature information of the first residual of the coding unit.

For example, a residual bitstream obtained by encoding the residual information may be decoded, to obtain decoded residual information; and then reconstruction is performed based on the first prediction information and the decoded residual information, to obtain the initial reconstructed picture of the coding unit and the feature information of the initial reconstructed picture of the coding unit. Feature restoration is performed on the feature information of the initial reconstructed picture of the coding unit, to obtain the initial reconstructed picture of the coding unit.

For example, the feature information of the target reconstructed picture of the reference unit may be obtained by performing feature extraction on the target reconstructed picture of the reference unit.

In a possible manner, the preset parameter of the coding unit may be directly encoded, to obtain a preset parameter bitstream. In this way, a decoder side can obtain the preset parameter of the current frame by decoding the preset parameter bitstream.

In a possible manner, feature extraction may be performed on the preset parameter of the coding unit, to obtain feature information of the preset parameter of the coding unit; and then the feature information of the preset parameter of the coding unit is encoded, to obtain a preset parameter bitstream. In this way, the decoder side can perform feature restoration based on information obtained from the preset parameter bitstream through decoding, to obtain a preset parameter of the current frame.

For example, the current frame may be divided into a plurality of coding units, and the encoding method in this application is performed for each coding unit. The coding unit may include at least one pixel. When the coding unit includes a plurality of pixels, the plurality of pixels included in the coding unit share one preset parameter.

For example, the encoding method in this application may be an AI video encoding method, and may be used to perform inter prediction on a picture frame in video data.

For example, the residual bitstream may be obtained by encoding the residual information.

It should be noted that, in a possible manner, the residual bitstream and the preset parameter bitstream are two bitstreams. In a possible manner, the residual bitstream and the preset parameter bitstream may be two parts of a same bitstream. In other words, a same bitstream carries the residual information and the preset parameter.

It should be noted that a sequence of encoding the residual information and encoding the preset parameter is not limited in this application.

According to the first aspect, encoding the residual information includes: performing adaptive bitrate encoding on the residual information based on the preset parameter. In this way, bitrate overheads can be reduced.

To be specific, a bitrate of encoding the residual information is adaptively adjusted based on the preset parameter of the coding unit. In a reconstruction process, the reconstructed picture information of the reference unit and the reconstructed picture information of the coding unit are fused, to generate the target reconstructed picture of the coding unit. Therefore, even if low-bitrate encoding is performed on the residual information of the current frame, quality of the target reconstructed picture of the coding unit can be ensured. Further, bitrate overheads can be reduced to some extent in a case of same quality.

According to any one of the first aspect or the implementations of the first aspect, performing inter prediction on the coding unit in the current frame, to obtain the first prediction information of the coding unit includes: determining a first optical flow of the coding unit based on the original picture of the coding unit and the target reconstructed picture of the reference unit; and determining the first prediction information based on the first optical flow and the reconstructed picture information of the reference unit; and the method further includes: performing adaptive bitrate encoding on the first optical flow based on the preset parameter. In this way, bitrate overheads can be reduced.

To be specific, a bitrate of encoding the first optical flow is adaptively adjusted based on the preset parameter of the coding unit. In the reconstruction process, the reconstructed picture information of the reference unit and the reconstructed picture information of the coding unit are fused, to generate the target reconstructed picture of the coding unit. Therefore, even if low-bitrate encoding is performed on feature information of the first optical flow of the current frame, quality of the target reconstructed picture of the coding unit can be ensured. Further, bitrate overheads can be reduced to some extent in a case of same quality.

For example, performing adaptive bitrate encoding on the first optical flow based on the preset parameter may include: determining the feature information of the first optical flow; and performing adaptive bitrate encoding on the feature information of the first optical flow based on the preset parameter. An optical flow bitstream may be obtained by encoding the feature information of the first optical flow.

It should be noted that, in a possible manner, the optical flow bitstream, the residual bitstream, and the preset parameter bitstream are three bitstreams. In a possible manner, the optical flow bitstream, the residual bitstream, and the preset parameter bitstream may be three parts of a same bitstream. In other words, a same bitstream carries the residual information, the preset parameter, and the first optical flow. In a possible manner, the residual bitstream and the preset parameter bitstream may be two parts of a same bitstream, and the optical flow bitstream is another bitstream. In a possible manner, the residual bitstream and the optical flow bitstream may be two parts of a same bitstream, and the preset parameter bitstream is another bitstream. In a possible manner, the preset parameter bitstream and the optical flow bitstream may be two parts of a same bitstream, and the residual bitstream is another bitstream. This is not limited in this application.

It should be further noted that a sequence of encoding the first optical flow, encoding the residual information, and encoding the preset parameter is not limited in this application.

According to any one of the first aspect or the implementations of the first aspect, determining the preset parameter of the coding unit includes: determining a similarity between a picture of the coding unit and a picture of the reference unit, where the picture of the coding unit includes the original picture of the coding unit and/or the initial reconstructed picture of the coding unit, and the picture of the reference unit includes an original picture of the reference unit and/or a target reconstructed picture of the reference unit; and determining the preset parameter based on the similarity.

When the similarity is greater than or equal to a similarity threshold, it indicates that the similarity between the picture of the coding unit and the picture of the reference unit is high. In this case, it may be determined that the motion complexity of the picture of the coding unit relative to the picture of the reference unit is low. A value of the preset parameter may be set to a first preset value. In other words, the first preset value may indicate that the motion complexity of the picture of the coding unit relative to the picture of the reference unit is low complexity. When the similarity is less than a similarity threshold, it indicates that the similarity between the picture of the coding unit and the picture of the reference unit is low. In this case, it may be determined that the motion complexity of the picture of the coding unit relative to the picture of the reference unit is high. A value of the preset parameter may be set to a second preset value. In other words, the second preset value may indicate that the motion complexity of the picture of the coding unit relative to the picture of the reference unit is high complexity. The similarity threshold may be set according to a requirement. If a similarity when two pictures are completely the same is 1, the similarity threshold may be a decimal less than 1 and greater than 0.

It should be noted that the first preset value is different from the second preset value. The first preset value may be greater than the second preset value, or the first preset value may be less than the second preset value. Specifically, this may be set according to a requirement. This is not limited in this application. In a possible manner, the first preset value and the second preset value may be numbers between 0 and 1 (both the first preset value and the second preset value may be 0 or 1). Optionally, a sum of the first preset value and the second preset value may be 1. The first preset value is 1, and the second preset value is 0; or the first preset value is 0, and the second preset value is 1. For another example, the first preset value is 0.8, and the second preset value is 0.2; or the first preset value is 0.2, and the second preset value is 0.8.

In a possible manner, an error between the picture of the coding unit and the picture of the reference unit may be calculated, and the similarity between the picture of the coding unit and the picture of the reference unit is determined based on the error between the picture of the coding unit and the picture of the reference unit. If the similarity when the two pictures are completely the same is 1, a difference between 1 and the error between the picture of the coding unit and the picture of the reference unit may be used as a similarity.

In a possible manner, a third optical flow of the coding unit may be obtained; second prediction information of the coding unit is determined based on the third optical flow of the coding unit and the target reconstructed picture of the reference unit; and the similarity between the picture of the coding unit and the picture of the reference unit is determined based on an error between the second prediction information of the coding unit and the picture of the coding unit. The initial reconstructed picture of the coding unit and the target reconstructed picture of the reference unit may be input into a motion estimation module, and the motion estimation module performs motion estimation, to output the third optical flow of the coding unit. Alternatively, the feature information of the first optical flow of the coding unit is input into an optical flow decoding model, and the optical flow decoding model decodes (that is, performs feature restoration on) the feature information of the first optical flow, and outputs the third optical flow of the coding unit.

It should be understood that the similarity may be determined in a plurality of manners, for example, calculating an error, and determining the similarity based on the error; or for another example, determining similarity calculation by using a similarity model. This is not limited in this application. In addition, the error may be calculated in another manner. This is not limited in this application.

According to any one of the first aspect or the implementations of the first aspect, fusing the reconstructed picture information of the reference unit and the reconstructed picture information of the coding unit, to obtain the target reconstructed picture of the coding unit includes: determining a weight of the reconstructed picture information of the reference unit and a weight of the reconstructed picture information of the coding unit based on the preset parameter; and performing weighted calculation on the reconstructed picture information of the reference unit and the reconstructed picture information of the coding unit based on the weight of the reconstructed picture information of the reference unit and the weight of the reconstructed picture information of the coding unit, to obtain the target reconstructed picture of the coding unit.

For example, when the value of the preset parameter is the first preset value, the weight of the reconstructed picture information of the coding unit may be less than the weight of the reconstructed picture information of the reference unit; or when the value of the preset parameter is the second preset value, the weight of the reconstructed picture information of the coding unit may be greater than the weight of the reconstructed picture information of the reference unit.

If the first preset value is greater than the second preset value, when the first preset value and the second preset value are numbers between 0 and 1 (both the first preset value and the second preset value may be 0 or 1), the value of the preset parameter of the coding unit may be used as the weight of the reconstructed picture information of the reference unit, and a difference between 1 and the value of the preset parameter is used as the weight of the reconstructed picture information of the coding unit. When both the first preset value and the second preset value are numbers greater than 1, the first preset value and the second preset value may be converted into numbers between 0 and 1, a value that is of the preset parameter of the coding unit and that is obtained through conversion is used as the weight of the reconstructed picture information of the reference unit, and a difference between 1 and the value that is of the preset parameter of the coding unit and that is obtained through conversion is used as the weight of the reconstructed picture information of the coding unit. If the first preset value is less than the second preset value, the contrary applies.

When the motion complexity of the picture of the coding unit relative to the picture of the reference unit is low complexity and the first preset value is 1, fusing the reconstructed picture information of the reference unit and the reconstructed picture information of the coding unit may be copying the reconstructed picture information of the reference unit to the coding unit, to obtain the target reconstructed picture of the coding unit. In this way, an error introduced by inter prediction and entropy encoding on the residual information can be compensated for, and the error in the current frame is reduced, thereby reducing the accumulated error in the subsequent frame, and ensuring time sequence stability.

When the motion complexity of the picture of the coding unit relative to the picture of the reference unit is high complexity and the second preset value is 0, the target reconstructed picture that is of the coding unit and that is obtained by fusing the reconstructed picture information of the reference unit and the reconstructed picture information of the coding unit is essentially the initial reconstructed picture of the coding unit. Because the motion complexity of the picture of the coding unit relative to the picture of the reference unit is high complexity, if the reconstructed picture information of the reference unit is copied to the coding unit, quality of the obtained target reconstructed picture of the coding unit is low. Therefore, the initial reconstructed picture of the coding unit that is obtained through reconstruction may be used as the initial reconstructed picture of the coding unit. In this way, quality of the reconstructed picture of the coding unit can be ensured.

When the motion complexity of the picture of the coding unit relative to the picture of the reference unit is low complexity and the first preset value and the second preset value are a value other than 0 and 1, in the target picture of the coding unit obtained by fusing the reconstructed picture information of the reference unit and the reconstructed picture information of the coding unit, the reconstructed picture information of the coding unit and the reconstructed picture information of the reference unit each account for a specific proportion. In this way, the error introduced by inter prediction and entropy encoding on the residual information can also be compensated for to some extent, and the error in the current frame is reduced, thereby reducing the accumulated error in the subsequent frame to some extent, and ensuring time sequence stability. In addition, quality of the target reconstructed picture of the coding unit can be further ensured to some extent.

According to any one of the first aspect or the implementations of the first aspect, fusing the reconstructed picture information of the reference unit and the reconstructed picture information of the coding unit, to obtain the target reconstructed picture of the coding unit includes: inputting the preset parameter, the reconstructed picture information of the reference unit, and the reconstructed picture information of the coding unit into a fusion model, to obtain the target reconstructed picture of the coding unit. In this case, the first preset value and the second preset value may not be limited. The fusion model is pre-trained, and has a capability of generating high-quality information (for example, a high-quality picture or high-quality feature information). In this way, the error in the coding unit in the current frame can be reduced, thereby reducing the accumulated error in the subsequent frame, and ensuring the time sequence stability. In addition, quality of the target reconstructed picture of the coding unit can be further ensured to some extent.

According to any one of the first aspect or the implementations of the first aspect, performing adaptive bitrate encoding on the residual information based on the preset parameter includes: encoding the residual information based on a first bitrate parameter when a value of the preset parameter is a first preset value; or encoding the residual information based on a second bitrate parameter when a value of the preset parameter is a second preset value. A target bitrate of a bitstream obtained by encoding the residual information based on the second bitrate parameter is greater than a target bitrate of a bitstream obtained by encoding the residual information based on the first bitrate parameter.

When the value of the preset parameter is the first preset value, the weight of the reconstructed picture information of the coding unit is less than the weight of the reconstructed picture information of the reference unit; or when the value of the preset parameter is the second preset value, the weight of the reconstructed picture information of the coding unit is greater than the weight of the reconstructed picture information of the reference unit. Therefore, when the motion complexity of the picture of the coding unit relative to the picture of the reference unit is low (that is, the value of the preset parameter is the first preset value), low-bitrate encoding may be performed on the residual information. In this way, bitrate overheads can be reduced without reducing quality of the target reconstructed picture of the coding unit. When the motion complexity of the picture of the coding unit relative to the picture of the reference unit is high (that is, the value of the preset parameter is the second preset value), high-bitrate encoding may be performed on the residual information. In this way, quality of the target reconstructed picture of the coding unit can be ensured.

For example, when the value of the preset parameter of the coding unit is the first preset value, low-bitrate encoding may be performed on the feature information of the first optical flow of the coding unit, to obtain the optical flow bitstream; or when the value of the preset parameter of the coding unit is the second preset value, high-bitrate encoding may be performed on the feature information of the first optical flow of the coding unit, to obtain the optical flow bitstream.

Specifically, when the value of the preset parameter is the first preset value, the feature information of the first optical flow is encoded based on a third bitrate parameter; or when the value of the preset parameter is the second preset value, the feature information of the first optical flow is encoded based on a fourth bitrate parameter. A target bitrate of a bitstream obtained by encoding the first optical flow based on the fourth bitrate parameter is greater than a target bitrate of a bitstream obtained by encoding the first optical flow based on the third bitrate parameter.

According to any one of the first aspect or the implementations of the first aspect, encoding the preset parameter includes: performing entropy estimation based on at least one of the residual information or a second optical flow of the coding unit, to determine a probability distribution of the preset parameter, where the second optical flow is obtained based on a bitstream obtained by encoding the first optical flow; and performing entropy encoding on the preset parameter based on the probability distribution of the preset parameter.

According to any one of the first aspect or the implementations of the first aspect, the method further includes: fusing the first prediction information and the reconstructed picture information of the reference unit based on the preset parameter, to obtain second prediction information; and determining the residual information of the coding unit based on the first prediction information and the original picture of the coding unit includes: determining the residual information of the coding unit based on the second prediction information and the original picture of the coding unit. In this way, accuracy of inter prediction can be improved, thereby reducing an error introduced by inter prediction, and the error in the current frame is further reduced, thereby further reducing the accumulated error in the subsequent frame.

According to any one of the first aspect or the implementations of the first aspect, the method is applied to an AI video encoding framework, and the AI video encoding framework includes an inter prediction module, a residual encoding module, an entropy encoding module, a preset parameter determining module, and a fusion module.

The inter prediction module is configured to: perform inter prediction on the coding unit, to obtain the first prediction information; and output the first prediction information to the residual encoding module.

The residual encoding module is configured to: determine the residual information based on the first prediction information and the original picture of the coding unit, and output the residual information to the entropy encoding module.

The preset parameter determining module is configured to: determine the preset parameter, and output the preset parameter to the entropy encoding module and the fusion module.

The entropy encoding module is configured to encode the residual information and the preset parameter.

The fusion module is configured to fuse the reconstructed picture information of the reference unit and the reconstructed picture information of the coding unit based on the preset parameter, to obtain the target reconstructed picture of the coding unit.

For example, the inter prediction module, the residual encoding module, the entropy encoding module, the preset parameter determining module, and the fusion module may be implemented through a neural network, or may be implemented based on an algorithm. This is not limited in this application.

For example, the AI video encoding framework may further include a residual decoding network. The first prediction information and the original picture of the coding unit (or the feature information of the original picture of the coding unit) may be input into a residual encoding network, to obtain the residual information. A result obtained by performing entropy decoding on an encoding result of the residual information is input into the residual decoding network, to obtain the decoded residual information.

For example, the first prediction information and the original picture of the coding unit may be directly input into the residual encoding network, to obtain the residual information of the coding unit; or a feature of the original picture of the coding unit may be first extracted, to obtain the feature information of the original picture of the coding unit, and then the first prediction information and the feature information of the original picture of the coding unit are input into the residual encoding network, to obtain the residual information of the coding unit. This is not limited in this application.

According to any one of the first aspect or the implementations of the first aspect, the inter prediction module includes a motion estimation network, an optical flow processing module, and a prediction module; the motion estimation network is configured to: perform motion estimation based on the original picture of the coding unit and the target reconstructed picture of the reference unit, to obtain the first optical flow of the coding unit; and output the first optical flow to the optical flow processing module; the optical flow processing module is configured to: perform processing based on the first optical flow, to determine the second optical flow; and output the second optical flow to the prediction module; and the prediction module is configured to perform prediction based on the reconstructed picture information of the reference unit and the second optical flow, to obtain the first prediction information.

According to a second aspect, an embodiment of this application provides a decoding method. The method includes: receiving a bitstream; obtaining decoded residual information of a coding unit in a current frame based on the bitstream, and obtaining a preset parameter of the coding unit based on the bitstream; performing inter prediction on the coding unit, to obtain first prediction information of the coding unit; performing reconstruction based on the decoded residual information and the first prediction information, to determine reconstructed picture information of the coding unit, where the reconstructed picture information of the coding unit includes an initial reconstructed picture of the coding unit or feature information of the initial reconstructed picture of the coding unit; and fusing the reconstructed picture information of the coding unit and reconstructed picture information of a reference unit based on the preset parameter, to obtain a target reconstructed picture of the coding unit, where the reconstructed picture information of the reference unit includes a target reconstructed picture of the reference unit or feature information of the target reconstructed picture of the reference unit, and the reference unit is a unit in a reference frame corresponding to the current frame.

According to a second aspect, fusing the reconstructed picture information of the coding unit and the reconstructed picture information of the reference unit based on the preset parameter, to obtain the target reconstructed picture of the coding unit includes: determining a weight of the reconstructed picture information of the coding unit and a weight of the reconstructed picture information of the reference unit based on the preset parameter; and performing weighted calculation on the reconstructed picture information of the coding unit and the reconstructed picture information of the reference unit based on the weight of the reconstructed picture information of the coding unit and the weight of the reconstructed picture information of the reference unit, to obtain the target reconstructed picture of the coding unit.

According to any one of the second aspect or the implementations of the second aspect, fusing the reconstructed picture information of the coding unit and the reconstructed picture information of the reference unit based on the preset parameter, to obtain the target reconstructed picture of the coding unit includes: inputting the preset parameter, the reconstructed picture information of the coding unit, and the reconstructed picture information of the reference unit into a fusion model, to obtain the target reconstructed picture of the coding unit.

According to any one of the second aspect or the implementations of the second aspect, the bitstream includes a preset parameter bitstream and an optical flow bitstream, and obtaining the preset parameter of the coding unit in the current frame based on the bitstream includes: performing entropy estimation based on at least one of the decoded residual information or a second optical flow of the coding unit, to determine a probability distribution of the preset parameter, where the second optical flow is obtained based on the optical flow bitstream; and obtaining the preset parameter from the preset parameter bitstream through entropy decoding based on the probability distribution of the preset parameter.

The preset parameter bitstream may be a bitstream obtained by encoding the preset parameter. The optical flow bitstream may be a bitstream obtained by encoding feature information of a first optical flow.

According to any one of the second aspect or the implementations of the second aspect, the bitstream includes a residual bitstream, and obtaining the decoded residual information of the coding unit based on the bitstream includes: performing adaptive bitrate decoding on the residual bitstream based on the preset parameter; and determining the decoded residual information of the coding unit based on information obtained by performing adaptive bitrate decoding on the residual bitstream.

The residual bitstream may be a bitstream obtained by encoding the residual information.

According to any one of the second aspect or the implementations of the second aspect, the bitstream includes the optical flow bitstream, and the method further includes: performing adaptive bitrate decoding on the optical flow bitstream based on the preset parameter; and determining a second optical flow of the coding unit based on information obtained by performing adaptive bitrate decoding on the optical flow bitstream.

According to any one of the second aspect or the implementations of the second aspect, the method is applied to an AI video decoding framework, and the AI video decoding framework includes a decoding module, an inter prediction module, a reconstruction module, and a fusion module.

The decoding module is configured to: obtain the preset parameter based on the bitstream, obtain the decoded residual information based on the bitstream, output the preset parameter to the fusion module, and output the decoded residual information to the reconstruction module.

The inter prediction module is configured to: perform inter prediction on the coding unit, to obtain the first prediction information; and output the first prediction information to the reconstruction module.

The reconstruction module is configured to: perform reconstruction based on the decoded residual information and the first prediction information, to determine the reconstructed picture information of the coding unit; and output the reconstructed picture information of the coding unit to the fusion module.

The fusion module is configured to fuse the reconstructed picture information of the coding unit and the reconstructed picture information of the reference unit based on the preset parameter, to obtain the target reconstructed picture of the coding unit.

Any one of the second aspect and the implementations of the second aspect corresponds to any one of the first aspect and the implementations of the first aspect. For technical effect corresponding to any one of the second aspect and the implementations of the second aspect, refer to technical effect corresponding to any one of the first aspect and the implementations of the first aspect. Details are not described herein again.

According to a third aspect, an embodiment of this application further provides an encoding method. The method includes: determining a preset parameter of a coding unit in a current frame; performing inter prediction on the coding unit, to obtain first prediction information of the coding unit; fusing the first prediction information and reconstructed picture information of a reference unit based on the preset parameter, to obtain second prediction information of the coding unit, where the reconstructed picture information of the reference unit includes a target reconstructed picture of the reference unit or feature information of the target reconstructed picture of the reference unit, and the reference unit is a unit in a reference frame corresponding to the current frame; determining residual information of the coding unit based on the second prediction information and an original picture of the coding unit; and encoding the residual information, and encoding the preset parameter.

In this application, after the first prediction information is obtained through inter prediction, the reconstructed picture information of the reference unit and the first prediction information is fused based on the preset parameter, to generate final prediction information (namely, the second prediction information). In other words, the reconstructed picture information of the reference unit and the first prediction information are fused based on a fusion rule (or a fusion policy or a fusion manner) corresponding to motion complexity of a picture of the coding unit relative to a picture of the reference unit, to generate final prediction information. In this way, for a coding unit whose picture has low motion complexity relative to the picture of the reference unit, accuracy of inter prediction can be improved to some extent, and an error in inter prediction can be reduced. Therefore, an error in the coding unit can be reduced to some extent, an error in the current frame can be reduced to some extent, and compression performance of the current frame can be improved, thereby reducing an accumulated error in another subsequent frame to some extent, improving compression performance of the another subsequent frame, and ensuring time sequence stability. For a coding unit whose picture has high motion complexity relative to the picture of the reference unit, accuracy of inter prediction can be ensured, thereby ensuring quality of the target reconstructed picture of the coding unit, and ensuring quality of the target reconstructed picture of the current frame.

According to any one of the third aspect or the implementations of the third aspect, encoding the residual information includes: performing adaptive bitrate encoding on the residual information based on the preset parameter.

According to any one of the third aspect or the implementations of the third aspect, performing inter prediction on the coding unit, to obtain the first prediction information of the coding unit includes: determining a first optical flow of the coding unit based on the original picture of the coding unit and the target reconstructed picture of the reference unit; and determining the first prediction information based on the first optical flow and the reconstructed picture information of the reference unit; and the method further includes: performing adaptive bitrate encoding on the first optical flow based on the preset parameter.

According to any one of the third aspect or the implementations of the third aspect, the method further includes: fusing the reconstructed picture information of the reference unit and the reconstructed picture information of the coding unit based on the preset parameter, to obtain a target reconstructed picture of the coding unit. The reconstructed picture information of the coding unit includes an initial reconstructed picture of the coding unit or feature information of the initial reconstructed picture of the coding unit, and the initial reconstructed picture of the coding unit and the feature information of the initial reconstructed picture of the coding unit are obtained through reconstruction based on the second prediction information and the residual information.

According to any one of the third aspect or the implementations of the third aspect, the method is applied to an AI video encoding framework, and the AI video encoding framework includes an inter prediction module, a residual encoding module, an entropy encoding module, a preset parameter determining module, and a fusion module.

The preset parameter determining module is configured to: determine the preset parameter, and output the preset parameter to the fusion module and the entropy encoding module.

The inter prediction module is configured to perform inter prediction on the coding unit, to obtain the first prediction information; and output the first prediction information to the fusion module.

The fusion module is configured to: fuse the first prediction information and the reconstructed picture information of the reference unit based on the preset parameter, to obtain the second prediction information; and output the second prediction information to the residual encoding module.

The residual encoding module is configured to: determine the residual information based on the second prediction information and the original picture of the coding unit, and output the residual information to the entropy encoding module.

The entropy encoding module is configured to: encode the residual information, and encode the preset parameter.

Any one of the third aspect and the implementations of the third aspect corresponds to any one of the first aspect and the implementations of the first aspect. For technical effect corresponding to any one of the third aspect and the implementations of the third aspect, refer to technical effect corresponding to any one of the first aspect and the implementations of the first aspect. Details are not described herein again.

According to a fourth aspect, this application provides a decoding method. The method includes: receiving a bitstream; obtaining decoded residual information of a coding unit in a current frame based on the bitstream, and obtaining a preset parameter of the coding unit based on the bitstream; performing inter prediction on the coding unit, to obtain first prediction information of the coding unit; fusing the first prediction information and reconstructed picture information of a reference unit based on the preset parameter, to obtain second prediction information of the coding unit, where the reconstructed picture information of the reference unit includes a target reconstructed picture of the reference unit or feature information of the target reconstructed picture of the reference unit, and the reference unit is a unit in a reference frame corresponding to the current frame; and performing reconstruction based on the decoded residual information and the second prediction information, to determine reconstructed picture information of the coding unit, where the reconstructed picture information of the coding unit includes an initial reconstructed picture of the coding unit or feature information of the initial reconstructed picture of the coding unit, and the feature information of the initial reconstructed picture of the coding unit is used to obtain the initial reconstructed picture of the coding unit.

For example, feature transformation (or referred to as feature restoration) may be performed on the feature information of the initial reconstructed picture of the coding unit, to obtain the initial reconstructed picture of the coding unit.

According to the fourth aspect, the method further includes:
fusing the reconstructed picture information of the coding unit and the reconstructed picture information of the reference unit based on the preset parameter, to obtain a target reconstructed picture of the coding unit.

According to any one of the fourth aspect or the implementations of the fourth aspect, the bitstream includes a preset parameter bitstream and an optical flow bitstream, and obtaining the preset parameter of the coding unit based on the bitstream includes:

  performing entropy estimation based on at least one of the decoded residual information and a second optical flow of the coding unit, to determine a probability distribution of the preset parameter, where the second optical flow is obtained based on the optical flow bitstream; and
  obtaining the preset parameter from the preset parameter bitstream through entropy decoding based on the probability distribution of the preset parameter.

According to any one of the fourth aspect or the implementations of the fourth aspect, the method is applied to an AI video decoding framework, and the AI video decoding framework includes a decoding module, an inter prediction module, a reconstruction module, and a fusion module.

The decoding module is configured to: obtain the decoded residual information based on the bitstream; obtain the preset parameter based on the bitstream; output the decoded residual information to the reconstruction module; and output the preset parameter to the fusion module.

The inter prediction module is configured to perform inter prediction on the coding unit, to obtain the first prediction information; and output the first prediction information to the fusion module.

The fusion module is configured to: fuse the first prediction information and the reconstructed picture information of the reference unit based on the preset parameter, to obtain the second prediction information; and output the second prediction information to the reconstruction module.

The reconstruction module is configured to: perform reconstruction based on the decoded residual information and the second prediction information, to determine the reconstructed picture information of the coding unit.

Any one of the fourth aspect and the implementations of the fourth aspect corresponds to any one of the first aspect and the implementations of the first aspect. For technical effect corresponding to any one of the fourth aspect and the implementations of the fourth aspect, refer to technical effect corresponding to any one of the first aspect and the implementations of the first aspect. Details are not described herein again.

According to a fifth aspect, an embodiment of this application provides an encoding apparatus, including a memory and a processor. The memory is coupled to the processor. The memory stores program instructions. When the program instructions are executed by the processor, the encoding apparatus is enabled to perform the encoding method according to any one of the first aspect or the possible implementations of the first aspect, or perform the encoding method according to any one of the third aspect or the possible implementations of the third aspect.

Any one of the fifth aspect and the implementations of the fifth aspect corresponds to any one of the first aspect and the implementations of the first aspect, or corresponds to any one of the third aspect and the implementations of the third aspect. For technical effect corresponding to any one of the fifth aspect and the implementations of the fifth aspect, refer to technical effect corresponding to any one of the first aspect and the implementations of the first aspect, or refer to technical effect corresponding to any one of the third aspect and the implementations of the third aspect. Details are not described herein again.

According to a sixth aspect, an embodiment of this application provides a decoding apparatus, including a memory and a processor. The memory is coupled to the processor. The memory stores program instructions. When the program instructions are executed by the processor, the decoding apparatus is enabled to perform the decoding method according to any one of the second aspect or the possible implementations of the second aspect, or perform the decoding method according to any one of the fourth aspect or the possible implementations of the fourth aspect.

Any one of the sixth aspect and the implementations of the sixth aspect corresponds to any one of the second aspect and the implementations of the second aspect, or corresponds to any one of the fourth aspect and the implementations of the fourth aspect. For technical effect corresponding to any one of the sixth aspect and the implementations of the sixth aspect, refer to technical effect corresponding to any one of the second aspect and the implementations of the second aspect, or refer to technical effect corresponding to any one of the fourth aspect and the implementations of the fourth aspect. Details are not described herein again.

According to a seventh aspect, an embodiment of this application provides a coding apparatus, including one or more interface circuits and one or more processors. The one or more processors receive or send data through the one or more interface circuits. When the one or more processors execute computer instructions, the method according to any one of the first aspect or the possible implementations of the first aspect or the method according to any one of the third aspect or the possible implementations of the third aspect is performed.

Any one of the seventh aspect and the implementations of the seventh aspect corresponds to any one of the first aspect and the implementations of the first aspect, or corresponds to any one of the third aspect and the implementations of the third aspect. For technical effect corresponding to any one of the seventh aspect and the implementations of the seventh aspect, refer to technical effect corresponding to any one of the first aspect and the implementations of the first aspect, or refer to technical effect corresponding to any one of the third aspect and the implementations of the third aspect. Details are not described herein again.

According to an eighth aspect, an embodiment of this application provides a coding apparatus, including one or more interface circuits and one or more processors. The one or more processors receive or send data through the one or more interface circuits. When the one or more processors execute computer instructions, the method according to any one of the second aspect or the possible implementations of the second aspect or the method according to any one of the fourth aspect or the possible implementations of the fourth aspect is performed.

Any one of the eighth aspect and the implementations of the eighth aspect corresponds to any one of the second aspect and the implementations of the second aspect, or corresponds to any one of the fourth aspect and the implementations of the fourth aspect. For technical effect corresponding to any one of the eighth aspect and the implementations of the eighth aspect, refer to technical effect corresponding to any one of the second aspect and the implementations of the second aspect, or refer to technical effect corresponding to any one of the fourth aspect and the implementations of the fourth aspect. Details are not described herein again.

According to a ninth aspect, an embodiment of this application provides a computer-readable storage medium. The computer-readable storage medium stores a computer program, and when the computer program is run on a computer or a processor, the computer or the processor is enabled to perform the encoding method according to any one of the first aspect or the possible implementations of the first aspect, or perform the encoding method according to any one of the third aspect or the possible implementations of the third aspect.

Any one of the ninth aspect and the implementations of the ninth aspect corresponds to any one of the first aspect and the implementations of the first aspect, or corresponds to any one of the third aspect and the implementations of the third aspect. For technical effect corresponding to any one of the ninth aspect and the implementations of the ninth aspect, refer to technical effect corresponding to any one of the first aspect and the implementations of the first aspect, or refer to technical effect corresponding to any one of the third aspect and the implementations of the third aspect. Details are not described herein again.

According to a tenth aspect, an embodiment of this application provides a computer-readable storage medium. The computer-readable storage medium stores a computer program, and when the computer program is run on a computer or a processor, the computer or the processor is enabled to perform the encoding method according to any one of the second aspect or the possible implementations of the second aspect, or perform the decoding method according to any one of the fourth aspect or the possible implementations of the fourth aspect.

Any one of the tenth aspect and the implementations of the tenth aspect corresponds to any one of the second aspect and the implementations of the second aspect, or corresponds to any one of the fourth aspect and the implementations of the fourth aspect. For technical effect corresponding to any one of the tenth aspect and the implementations of the tenth aspect, refer to technical effect corresponding to any one of the second aspect and the implementations of the second aspect, or refer to technical effect corresponding to any one of the fourth aspect and the implementations of the fourth aspect. Details are not described herein again.

According to an eleventh aspect, an embodiment of this application provides a computer program product. The computer program product includes computer instructions, and when the computer instructions are executed by a computer or a processor, the computer or the processor is enabled to perform the encoding method according to any one of the first aspect or the possible implementations of the first aspect, or perform the encoding method according to any one of the third aspect or the possible implementations of the third aspect.

Any one of the eleventh aspect and the implementations of the eleventh aspect corresponds to any one of the first aspect and the implementations of the first aspect, or corresponds to any one of the third aspect and the implementations of the third aspect. For technical effect corresponding to any one of the eleventh aspect and the implementations of the eleventh aspect, refer to technical effect corresponding to any one of the first aspect and the implementations of the first aspect, or refer to technical effect corresponding to any one of the third aspect and the implementations of the third aspect. Details are not described herein again.

According to a twelfth aspect, an embodiment of this application provides a computer program product. The computer program product includes computer instructions, and when the computer instructions are executed by a computer or a processor, the computer or the processor is enabled to perform the decoding method according to any one of the second aspect or the possible implementations of the second aspect, or perform the decoding method according to any one of the fourth aspect or the possible implementations of the fourth aspect.

Any one of the twelfth aspect and the implementations of the twelfth aspect corresponds to any one of the second aspect and the implementations of the second aspect, or corresponds to any one of the fourth aspect and the implementations of the fourth aspect. For technical effect corresponding to any one of the twelfth aspect and the implementations of the twelfth aspect, refer to technical effect corresponding to any one of the second aspect and the implementations of the second aspect, or refer to technical effect corresponding to any one of the fourth aspect and the implementations of the fourth aspect. Details are not described herein again.

According to a thirteenth aspect, an embodiment of this application provides a bitstream storage apparatus. The apparatus includes a receiver and at least one storage medium. The receiver is configured to receive a bitstream. The at least one storage medium is configured to store the bitstream. The bitstream is generated according to any one of the first aspect and the implementations of the first aspect, or is generated according to any one of the third aspect and the implementations of the third aspect.

Any one of the thirteenth aspect and the implementations of the thirteenth aspect corresponds to any one of the first aspect and the implementations of the first aspect, or corresponds to any one of the third aspect and the implementations of the third aspect. For technical effect corresponding to any one of the thirteenth aspect and the implementations of the thirteenth aspect, refer to technical effect corresponding to any one of the first aspect and the implementations of the first aspect, or refer to technical effect corresponding to any one of the third aspect and the implementations of the third aspect. Details are not described herein again.

According to a fourteenth aspect, an embodiment of this application provides a bitstream transmission apparatus. The apparatus includes a transmitter and at least one storage medium. The at least one storage medium is configured to store a bitstream. The bitstream is generated according to any one of the first aspect and the implementations of the first aspect, or is generated according to any one of the third aspect and the implementations of the third aspect. The transmitter is configured to: obtain the bitstream from the storage medium, and send the bitstream to a device-side device through a transmission medium.

Any one of the fourteenth aspect and the implementations of the fourteenth aspect corresponds to any one of the first aspect and the implementations of the first aspect, or corresponds to any one of the third aspect and the implementations of the third aspect. For technical effect corresponding to any one of the fourteenth aspect and the implementations of the fourteenth aspect, refer to technical effect corresponding to any one of the first aspect and the implementations of the first aspect, or refer to technical effect corresponding to any one of the third aspect and the implementations of the third aspect. Details are not described herein again.

According to a fifteenth aspect, an embodiment of this application provides a bitstream distribution system. The system includes: at least one storage medium, configured to store at least one bitstream, where the at least one bitstream is generated according to any one of the first aspect and the implementations of the first aspect, or is generated according to any one of the third aspect and the implementations of the third aspect; and a streaming media device, configured to: obtain a target bitstream from the at least one storage medium, and send the target bitstream to a device-side device. The streaming media device includes a content server or a content delivery server.

Any one of the fifteenth aspect and the implementations of the fifteenth aspect corresponds to any one of the first aspect and the implementations of the first aspect, or corresponds to any one of the third aspect and the implementations of the third aspect. For technical effect corresponding to any one of the fifteenth aspect and the implementations of the fifteenth aspect, refer to technical effect corresponding to any one of the first aspect and the implementations of the first aspect, or refer to technical effect corresponding to any one of the third aspect and the implementations of the third aspect. Details are not described herein again.

**BRIEF DESCRIPTION OF DRAWINGS**

FIG. 1A is a diagram of an example application framework;
FIG. 1B is a diagram of an example storage framework;
FIG. 1C is a diagram of an example transmission framework;
FIG. 2A is a diagram of a structure of an example AI video encoding framework;
FIG. 2B is a diagram of a structure of an example AI video decoding framework;
FIG. 3A is a diagram of an example AI video encoding process;
FIG. 3B is a diagram of an example preset parameter encoding process;
FIG. 3C is a diagram of an example encoding process;
FIG. 3D is a diagram of an example encoding process;
FIG. 4A is a diagram of an example decoding process;
FIG. 4B is a diagram of an example preset parameter encoding process;
FIG. 4C is a diagram of example test video reconstruction quality;
FIG. 5A is a diagram of an example encoding process;
FIG. 5B is a diagram of an example encoding process;
FIG. 6 is a diagram of an example decoding process;
FIG. 7A is a diagram of an example encoding process;
FIG. 7B is a diagram of an example encoding process;
FIG. 8 is a diagram of an example decoding process;
FIG. 9 is a diagram of example test video reconstruction quality;
FIG. 10A is a diagram of an example encoding process;
FIG. 10B is a diagram of an example encoding process;
FIG. 11 is a diagram of an example decoding process; and
FIG. 12 is a diagram of a structure of an example apparatus.

**DESCRIPTION OF EMBODIMENTS**

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In embodiments of this application, the word such as "example" or "for example" represents giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

In descriptions of embodiments of this application, "a plurality of" means two or more, unless otherwise specified. For example, a plurality of processing units mean two or more processing units, and a plurality of systems mean two or more systems.

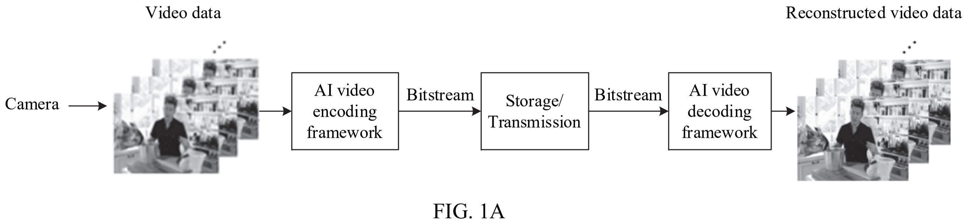

FIG. 1A is a diagram of an example application framework.

As shown in FIG. 1A, for example, a camera (camera/video camera) may perform video capture to obtain video data; and then, an AI video encoding framework may perform AI video encoding on the video data, to obtain a bitstream. Then, the bitstream may be stored locally, or the bitstream may be transmitted to a remote device.

Still as shown in FIG. 1A, in a possible manner, after the bitstream is locally stored, when video playing or video editing needs to be performed, an AI video decoding framework may perform AI video decoding on the bitstream, to obtain reconstructed video data. Then, the reconstructed video data may be played or edited.

Still as shown in FIG. 1A, in a possible manner, after the remote device receives the bitstream, when video playing or video editing needs to be performed, an AI video decoding framework may perform AI video decoding on the bitstream, to obtain reconstructed video data. Then, the reconstructed video data may be played or edited.

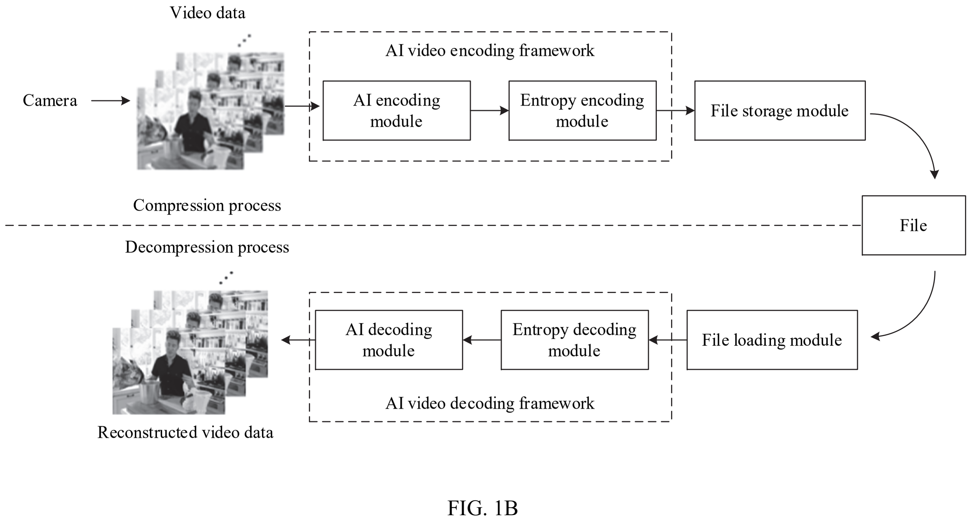

FIG. 1B is a diagram of an example storage framework.

As shown in FIG. 1B, for example, an AI video encoding framework may include an AI encoding module (which may also be referred to as an AI encoding unit) and an entropy encoding module (which may also be referred to as an entropy encoding unit), and an AI video decoding framework may include an AI decoding module (which may also be referred to as an AI decoding unit) and an entropy decoding module (which may also be referred to as an entropy decoding unit). It should be understood that FIG. 1B shows merely an example of this application. The AI video encoding framework and the AI video decoding framework may include more modules than those shown in FIG. 1B. This is not limited in this application.

For example, the AI encoding module and the AI decoding module may be disposed in an embedded neural network processing unit (Neural network Processing Unit, NPU) or a graphics processing unit (Graphics Processing Unit, GPU). For example, the entropy encoding module and the entropy decoding module may be disposed in a central processing unit (Central Processing Unit, CPU). For example, a file storage module and a file loading module may be disposed in the CPU.

As shown in FIG. 1B, for example, after capturing video data, a camera may input the video data into the AI encoding module. Then, the AI encoding module may perform the following processing on each frame of picture in the video data: performing prediction (including intra prediction and inter prediction, and the inter prediction is used as an example for description in this application), determining prediction information, determining residual information based on the prediction information and an original picture, determining a probability distribution of the residual information, and inputting the residual information and the probability distribution of the residual information into the entropy encoding module. Then, the entropy encoding module may perform entropy encoding on the residual information based on the probability distribution of the residual information, to obtain a bitstream; and input the bitstream into the file storage module for storage, to obtain a file.

Still as shown in FIG. 1B, for example, when video playing or video editing needs to be performed, the file loading module may load the file, and then input the bitstream in the file into the entropy decoding module. Then, the entropy decoding module may obtain the probability distribution of the residual information from the AI decoding module, obtain the residual information from the bitstream through entropy decoding based on the probability distribution of the residual information, and output the residual information to the AI decoding module. Then, the AI decoding module may perform inter prediction, to obtain prediction information; and perform reconstruction based on the prediction information and the residual information, to obtain a reconstructed picture. Further, reconstructed video data may be obtained.

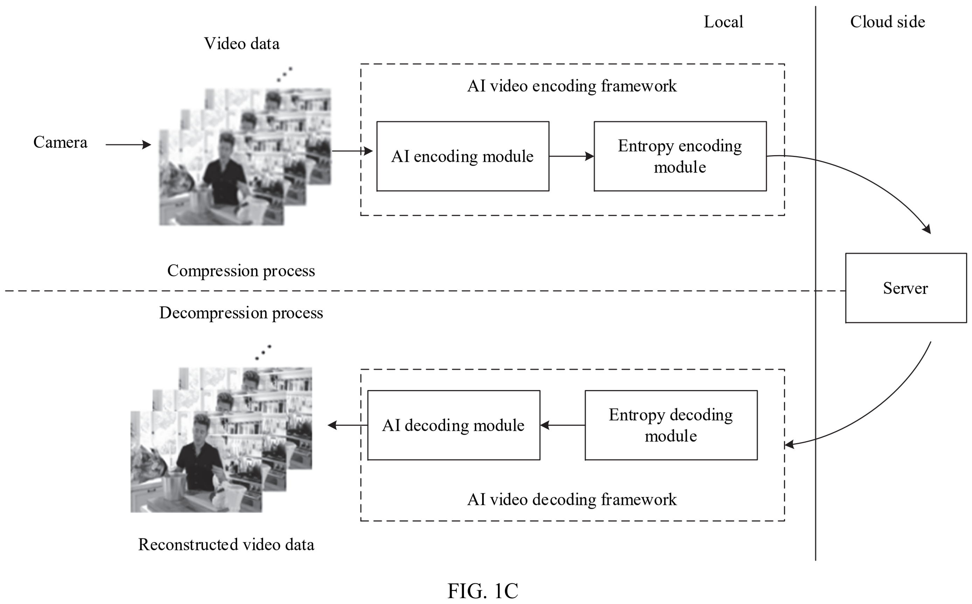

FIG. 1C is a diagram of an example transmission framework.

As shown in FIG. 1C, for example, an encoding process of an encoder side may be as follows:

For example, after capturing video data, a camera may input the video data into an AI encoding module. Then, the AI encoding module may perform the following processing on each frame of picture in the video data: performing prediction (including intra prediction and inter prediction, and the inter prediction is used as an example for description in this application), determining prediction information, determining residual information based on the prediction information and an original picture, determining a probability distribution of the residual information, and inputting the residual information and the probability distribution of the residual information into an entropy encoding module. Then, the entropy encoding module may perform entropy encoding on the residual information based on the probability distribution of the residual information, to obtain a bitstream; and send the bitstream to a cloud server.

Then, the server may send the bitstream to a decoder side. For example, the server may be a single server, or may be a server cluster. This is not limited in this application.

Still as shown in FIG. 1C, for example, after the decoder side receives the bitstream sent by the server, a decoding process may be as follows:

For example, a file loading module may load a file, and then send a bitstream in the file to an entropy decoding module. Then, an AI decoding network may perform inter prediction, to obtain the prediction information. Then, the entropy decoding module may obtain the probability distribution of the residual information from an AI decoding module, obtain the residual information from the bitstream through entropy decoding based on the probability distribution of the residual information, and output the residual information to the AI decoding module. Then, reconstruction is performed based on the prediction information and the residual information, to obtain a reconstructed picture. Further, reconstructed video data may be obtained.

It should be understood that the encoder side may also directly send the bitstream to the decoder side without forwarding by the server. This is not limited in this application.

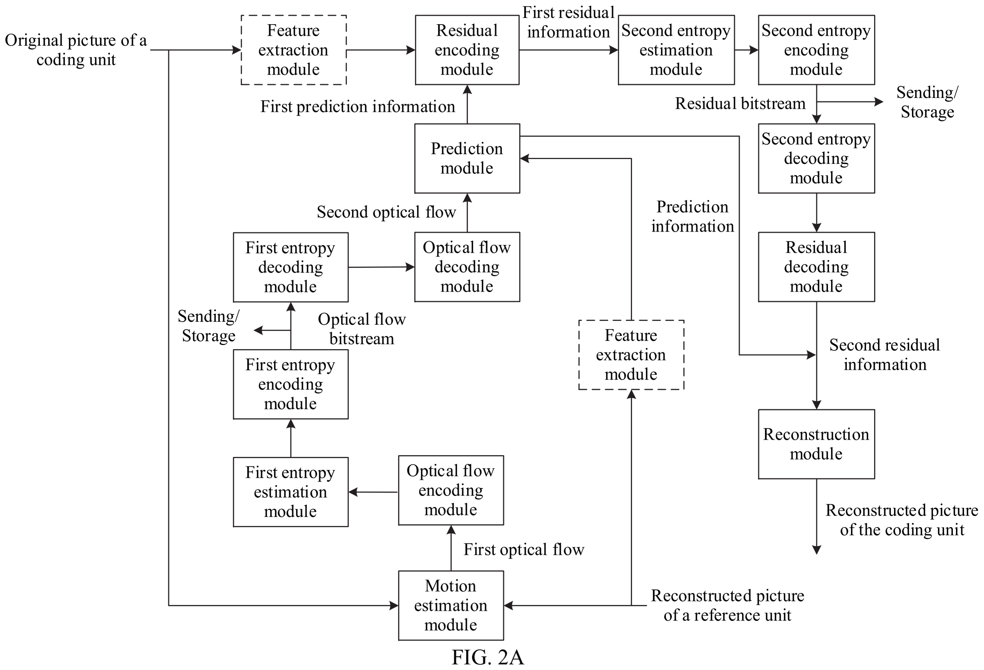

FIG. 2A is a diagram of a structure of an example AI video encoding framework. In the embodiment of FIG. 2A, an inter encoding process is shown.

As shown in FIG. 2A, for example, an AI encoding module may include a motion estimation module, an optical flow encoding module, a first entropy estimation module, an optical flow decoding module, a prediction module, a feature extraction module, a residual encoding module, a second entropy estimation module, a residual decoding module, and a reconstruction module. It should be understood that the AI encoding module may further include more or fewer modules than those shown in FIG. 2A. This is not limited in this application.

As shown in FIG. 2A, for example, entropy encoding modules may include a first entropy encoding module and a second entropy encoding module.

As shown in FIG. 2A, for example, the AI video encoding framework may further include entropy decoding modules, and the entropy decoding modules may include a first entropy decoding module and a second entropy decoding module.

It should be noted that the feature extraction module in a dashed box in FIG. 2A is an optional module.

It should be noted that the modules included in the AI video encoding framework may be implemented only by using a neural network, or may be implemented by a combination of an algorithm and a neural network. Alternatively, a part of the modules included in the AI video encoding framework may be implemented based only on an algorithm. This is not limited in this application.

For example, an original picture (namely, a picture of a current frame in a picture sequence of an original video (which may also be referred to as a to-be-encoded video)) of the current frame may be first divided into a plurality of coding units (it should be noted that the coding unit may be a minimum coding unit, and one coding unit may include at least one pixel); and then each coding unit in the current frame is encoded.

As shown in FIG. 2A, an example in which inter encoding is performed on a coding unit in a picture frame in video data is used for description. An AI video encoding process may be as follows:

For example, an original picture of the coding unit and a reconstructed picture of a reference unit in a reference frame corresponding to the current frame may be input into the motion estimation module. Then, the motion estimation module may perform motion estimation based on the original picture of the coding unit and the reconstructed picture of the reference unit, to determine an optical flow (referred to as a first optical flow subsequently) of the coding unit; and output the first optical flow of the coding unit to the optical flow encoding module. The optical flow encoding module (which may also be referred to as an optical flow feature extraction module) may encode the first optical flow of the coding unit (it should be noted that encoding performed by the optical flow encoding module is essentially feature extraction), to obtain feature information (which may also be referred to as a compressed feature of the first optical flow of the coding unit) of the first optical flow of the coding unit; and output the feature information to the first entropy estimation module.

For example, the first entropy estimation module may perform probability estimation on the feature information of the first optical flow of the coding unit, and determine a probability distribution (which may be referred to as an optical flow probability distribution of the coding unit subsequently) of the feature information of the first optical flow of the coding unit; and then output the feature information of the first optical flow of the coding unit and the optical flow probability distribution of the coding unit to the first entropy encoding module.

For example, the first entropy encoding module may perform entropy encoding on the feature information of the first optical flow of the coding unit based on the optical flow probability distribution of the coding unit, to obtain an optical flow bitstream.

For example, the optical flow bitstream may be sent/stored (for example, the optical flow bitstream is sent to a server or a decoder side). In addition, the optical flow bitstream may be output to the first entropy decoding module. In addition, the first entropy estimation module may further output the optical flow probability distribution of the coding unit to the first entropy decoding module.

For example, the first entropy decoding module may perform entropy decoding on the optical flow bitstream based on the optical flow probability distribution of the coding unit, to obtain the feature information (which may also be referred to as feature information of a second optical flow of the coding unit) that is of the first optical flow of the coding unit and that is obtained through decoding; and output the feature information of the second optical flow of the coding unit to the optical flow decoding module.

For example, the optical flow decoding module may decode the feature information of the second optical flow of the coding unit (it should be noted that decoding performed by the optical flow decoding module is essentially feature restoration), to obtain the second optical flow of the coding unit; and output the second optical flow of the coding unit to the prediction module. The second optical flow may be generally described as being determined by the optical flow processing module based on the first optical flow. The optical flow processing module may include the optical flow encoding module and the optical flow decoding module.

In a possible manner, when the AI encoding module includes the feature extraction module, the reconstructed picture of the reference unit may be input into the feature extraction module. The feature extraction module extracts a feature of the reconstructed picture of the reference unit, to obtain feature information of the reconstructed picture of the reference unit; and outputs the feature information of the reconstructed picture of the reference unit to the prediction module. The prediction module may perform prediction based on the second optical flow of the coding unit and the feature information of the reconstructed picture of the reference unit, to obtain prediction information (referred to as first prediction information subsequently) of the coding unit; and output the first prediction information of the coding unit to the residual encoding module. Correspondingly, the original picture of the coding unit may be input into the feature extraction module. The feature extraction module extracts a feature of the original picture of the coding unit, to obtain feature information of the original picture of the coding unit; and outputs the feature information of the original picture of the coding unit to the residual encoding module. The residual encoding module outputs residual information of the coding unit (referred to as first residual information of the coding unit below) to the second entropy estimation module based on the feature information of the original picture of the coding unit and the first prediction information of the coding unit. The first residual information of the coding unit may be a first residual of the coding unit (the first residual may be a residual between the feature information of the original picture of the coding unit and the prediction information of the coding unit, or may be feature information (the feature information of the first residual may also be referred to as a compressed feature of the first residual, and may be obtained by encoding the first residual by the residual encoding module (it should be noted that encoding performed by the residual encoding module is essentially feature extraction)) of the first residual of the coding unit). This application is described by using an example in which the first residual information of the coding unit is the feature information of the first residual of the coding unit.

In a possible manner, when the AI encoding module does not include the feature extraction module, the reconstructed picture of the reference unit may be directly input into the prediction module. The prediction module performs prediction based on the second optical flow of the coding unit and the reconstructed picture of the reference unit, to obtain the first prediction information of the coding unit; and outputs the first prediction information of the coding unit to the residual encoding module. Correspondingly, the original picture of the coding unit may be directly input into the residual encoding module. The residual encoding module may output the first residual information of the coding unit to the second entropy estimation module based on the original picture of the coding unit and the first prediction information of the coding unit.

For example, the second entropy estimation module may perform probability estimation on the first residual information of the coding unit, and determine a probability distribution (which may be referred to as a residual probability distribution of the coding unit subsequently) of the first residual information of the coding unit; and then output the first residual information of the coding unit and the residual probability distribution of the coding unit to the second entropy encoding module.

For example, the second entropy encoding module may perform entropy encoding on the first residual information of the coding unit based on the residual probability distribution of the coding unit, to obtain a residual bitstream.

For example, the residual bitstream may be sent/stored (for example, the residual bitstream is sent to a server or a decoder side). In addition, the residual bitstream may be output to the second entropy decoding module. In addition, the second entropy estimation module may further output the residual probability distribution of the coding unit to the second entropy decoding module.

For example, the second entropy decoding module may perform entropy decoding on the residual bitstream based on the residual probability distribution of the coding unit, to obtain the first residual information that is of the coding unit and that is obtained through entropy decoding. When the first residual information of the coding unit is the feature information of the first residual of the coding unit, the first residual information that is of the coding unit and that is obtained through entropy decoding may be output to the residual decoding module.

For example, the residual decoding module may decode the first residual information that is of the coding unit and that is obtained through entropy decoding (it should be noted that decoding performed by the residual decoding module is essentially feature restoration), to obtain second residual information (namely, decoded residual information) of the coding unit; and output the second residual information of the coding unit to the reconstruction module. It should be noted that when the first residual information of the coding unit is the first residual of the coding unit, the AI video encoding framework may not include the residual decoding module. In this case, the second residual information of the coding unit is the first residual information that is of the coding unit and that is obtained through entropy decoding. In addition, in other words, the second residual information of the coding unit is obtained by decoding an encoding result (namely, the residual bitstream) of the first residual information of the coding unit. When the first residual information of the coding unit is the feature information of the first residual of the coding unit, decoding in this step includes entropy decoding and feature restoration. When the first residual information of the coding unit is the first residual of the coding unit, decoding in this step is entropy decoding.

For example, the prediction module may further output the first prediction information of the coding unit to the reconstruction module. When the AI encoding module includes the feature extraction module, the reconstruction module may perform reconstruction based on the second residual information of the coding unit and the first prediction information of the coding unit, to obtain feature information of a reconstructed picture of the coding unit; and then the reconstruction module may perform feature transformation on the feature information of the reconstructed picture of the coding unit, to obtain the reconstructed picture of the coding unit. When the AI encoding module does not include the feature extraction module, the reconstruction module performs reconstruction based on the second residual information of the coding unit and the first prediction information of the coding unit, to obtain the reconstructed picture of the coding unit.

Optionally, in this application, information used to determine the optical flow probability distribution of the coding unit may be further encoded and sent to the decoder side, so that the decoder side determines the optical flow probability distribution, to obtain the second optical flow of the coding unit; and information used to determine the residual probability distribution of the coding unit is encoded and sent to the decoder side, so that the decoder side determines the residual probability distribution, to obtain the second residual information of the coding unit.

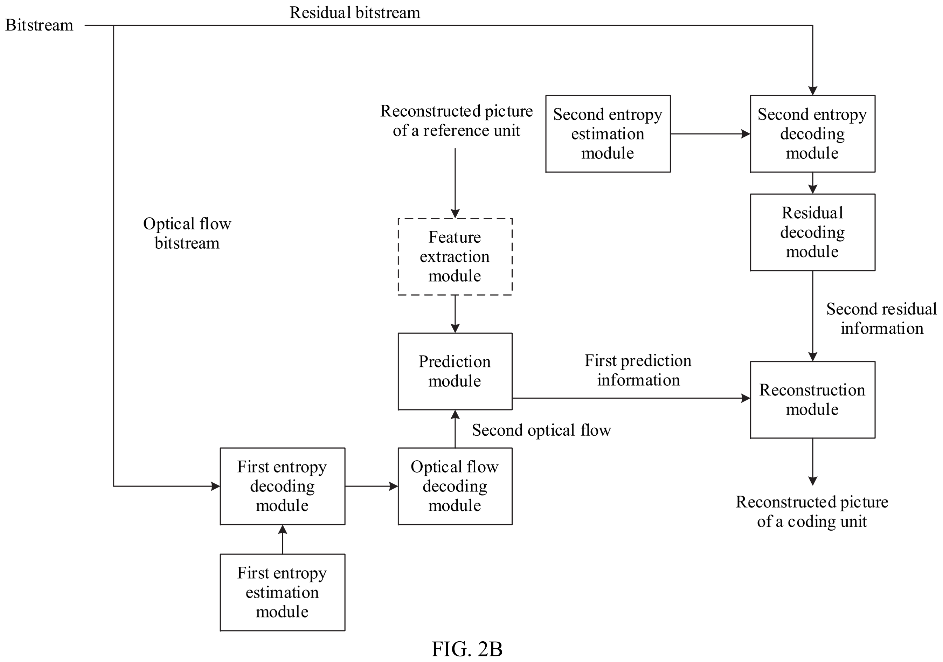

FIG. 2B is a diagram of a structure of an example AI video decoding framework.

As shown in FIG. 2B, for example, an AI decoding module may include a first entropy estimation module, a second entropy estimation module, an optical flow decoding module, a prediction module, a feature extraction module, a residual decoding module, and a reconstruction module. It should be understood that the AI encoding module may further include more or fewer modules than those shown in FIG. 2B. This is not limited in this application.

As shown in FIG. 2B, for example, the entropy decoding module may include a first entropy decoding module and a second entropy encoding module.

It should be noted that the feature extraction module in a dashed box in FIG. 2B is an optional module.

It should be noted that the modules included in the AI video decoding framework may be implemented only by using a neural network, or may be implemented by a combination of an algorithm and a neural network. Alternatively, a part of the modules included in the AI video decoding framework may be implemented based only on an algorithm. This is not limited in this application.

Still as shown in FIG. 2B, an example in which inter decoding is performed on a coding unit in a picture frame in video data is used for description. An AI video decoding process may be as follows:

For example, a decoder side may receive a bitstream, and the bitstream may include an optical flow bitstream and a residual bitstream. When the bitstream received by the decoder side does not include a bitstream of information used to determine an optical flow probability distribution of the coding unit, the first entropy estimation module may perform probability estimation based on a reconstructed picture of a reference unit, first prediction information of a reference unit, feature information of a reconstructed picture of a reference unit, or the like, determine the optical flow probability distribution of the coding unit, and output the optical flow probability distribution to the first entropy decoding module. When the received bitstream includes the bitstream of the information used to determine the optical flow probability distribution of the coding unit, the first entropy decoding module may obtain, from the bitstream through entropy decoding, the information used to determine the optical flow probability distribution of the coding unit, and output the information to the first entropy estimation module. Then, the first entropy estimation module may perform probability estimation based on the information used to determine the optical flow probability distribution of the coding unit, determine the optical flow probability distribution of the coding unit frame, and output the optical flow probability distribution to the first entropy decoding module.

For example, the first entropy decoding module may perform entropy decoding on the optical flow bitstream based on the optical flow probability distribution of the coding unit, to obtain feature information of a second optical flow of the coding unit; and output the feature information of the second optical flow to the optical flow decoding module.

For example, the optical flow decoding module may perform feature restoration on the feature information of the second optical flow of the coding unit, to obtain the second optical flow of the coding unit; and output the second optical flow of the coding unit to the prediction module.

For example, when the received bitstream does not include a bitstream of information used to determine a residual probability distribution of the coding unit, the second entropy estimation module may perform probability estimation based on a reconstructed picture of a reference unit, first prediction information of a reference unit, feature information of a reconstructed picture of a reference unit, or the like, determine the residual probability distribution of the coding unit, and output the residual probability distribution to the second entropy decoding module. When the received bitstream includes the bitstream of the information used to determine the residual probability distribution of the coding unit, the second entropy decoding module may obtain, from the bitstream through entropy decoding, the information used to determine the residual probability distribution of the coding unit; and then, the second entropy estimation module performs probability estimation according to the information used to determine the residual probability distribution of the coding unit, determines the residual probability distribution of the coding unit, and outputs the residual probability distribution to the second entropy decoding module.

For example, the second entropy decoding module may perform entropy decoding on the bitstream of the information used to determine the residual probability distribution, to obtain the information used to determine the residual probability distribution of the coding unit; and output the information used to determine the residual probability distribution of the coding unit to the second entropy estimation module. Then, the second entropy estimation module performs probability estimation based on the information used to determine the residual probability distribution of the coding unit, determines the residual probability distribution of the coding unit, and outputs the residual probability distribution to the second entropy decoding module.

For example, the second entropy decoding module may perform entropy decoding on the residual bitstream based on the residual probability distribution of the coding unit, to obtain first residual information that is of the coding unit and that is obtained through entropy decoding; and output the first residual information to the residual decoding module.

For example, the residual decoding module may perform feature restoration on the first residual information that is of the coding unit and that is obtained through entropy decoding, to obtain second residual information of the coding unit; and output the second residual information of the coding unit to the reconstruction module.

In a possible manner, when the AI decoding module includes the feature extraction module, the reconstructed picture of the reference unit may be input into the feature extraction module. The feature extraction module extracts a feature of the reconstructed picture of the reference unit, to obtain feature information of the reconstructed picture of the reference unit; and outputs the feature information of the reconstructed picture of the reference unit to the prediction module. The prediction module may perform prediction based on the second optical flow of the coding unit and the feature information of the reconstructed picture of the reference unit, to obtain first prediction information of the coding unit; and output the first prediction information of the coding unit to the reconstruction module. Then, the reconstruction module may perform reconstruction based on the second residual information of the coding unit and the first prediction information of the coding unit, to obtain feature information of a reconstructed picture of the coding unit; and then the reconstruction module may perform feature transformation (for example, feature restoration) on the feature information of the reconstructed picture of the coding unit, to obtain the reconstructed picture of the coding unit.

In a possible manner, when the AI decoding module does not include the feature extraction module, the reconstructed picture of the reference unit may be directly input into the prediction module. The prediction module performs prediction based on the second optical flow of the coding unit and the reconstructed picture of the reference unit, to obtain first prediction information of the coding unit; and outputs the first prediction information of the coding unit to the reconstruction module. Then, the reconstruction module performs reconstruction based on the second residual information of the coding unit and the first prediction information of the coding unit, to obtain a reconstructed picture of the coding unit.

It should be understood that names of the modules included in the AI video encoding framework shown in FIG. 2A and names of the modules included in the AI video decoding framework shown in FIG. 2B are not limited in the present invention. In addition, the modules included in the AI video encoding framework may also be referred to as units, and the modules included in the AI video decoding framework may also be referred to as units.

It should be noted that, in a possible manner, the residual bitstream and the optical flow bitstream are two bitstreams. In a possible manner, the residual bitstream and the optical flow bitstream may be two parts of a same bitstream. In other words, a same bitstream carries the residual information and the first optical flow.

The following describes AI video encoding and decoding processes based on FIG. 2A.

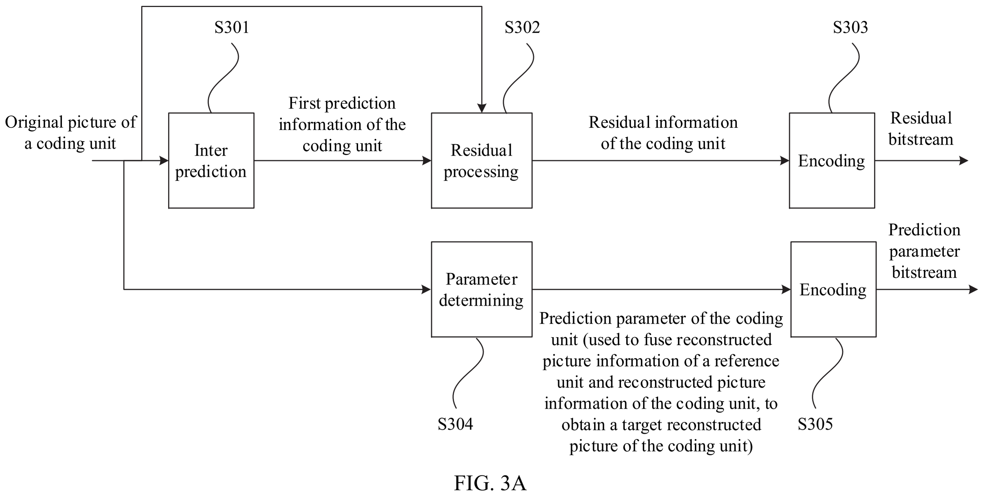

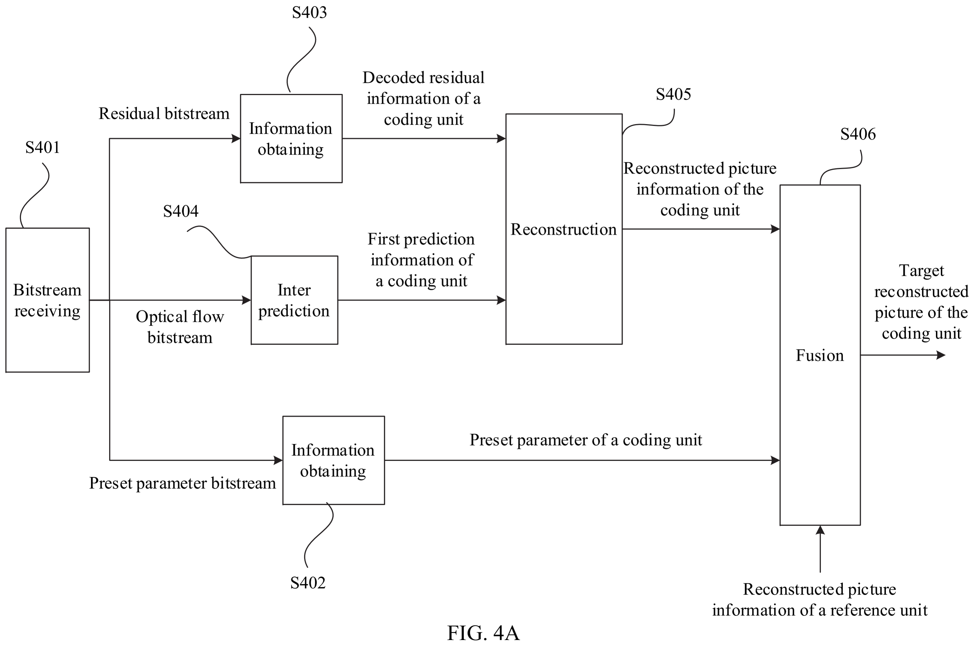

In the following embodiments of FIG. 3A and FIG. 4A, on the basis of FIG. 2A, post-processing is performed on the reconstructed picture that is of the coding unit and that is obtained through reconstruction, to reduce an accumulated error.

FIG. 3A is a diagram of an example AI video encoding process. In FIG. 3A, encoding a coding unit of a frame of picture in an original video is used as an example for description.

S301: Perform inter prediction on a coding unit in a current frame, to obtain first prediction information of the coding unit.

For example, S301 may be performed by an inter prediction module in an AI video encoding framework. The inter prediction module may include a motion estimation module, an optical flow processing module (including an optical flow encoding module and an optical flow decoding module), a first entropy estimation module, and a prediction module in FIG. 3A. For a specific process of performing inter prediction on the coding unit, refer to the descriptions in the embodiment of FIG. 2A. Details are not described herein again.

In addition, the motion estimation module may be a motion estimation network.

S302: Determine residual information of the coding unit based on the first prediction information and an original picture of the coding unit.

For example, S302 may be performed by a residual encoding module in the AI video encoding framework. For details, refer to the descriptions in the embodiment of FIG. 2A. Details are not described herein again. It should be noted that the residual information that is of the coding unit and that is determined in S302 corresponds to the first residual information of the coding unit in the embodiment of FIG. 2A.

S303: Encode the residual information of the coding unit.

For example, S303 may be performed by the foregoing second entropy encoding module, to obtain a residual bitstream. For details, refer to the descriptions in the embodiment of FIG. 2A. Details are not described herein again. It should be noted that the residual information of the coding unit in S303 corresponds to the first residual information of the coding unit in the embodiment of FIG. 2A.

S304: Determine a preset parameter of the coding unit.

For example, the AI video encoding framework may further include a preset parameter determining module, configured to perform S304.

For example, the preset parameter of the coding unit may be determined based on a picture of the coding unit and a picture of the reference unit. The preset parameter is used to describe motion complexity of the picture of the coding unit relative to the picture of the reference unit. For example, the picture of the coding unit includes the original picture of the coding unit and/or an initial reconstructed picture of the coding unit, and the picture of the reference unit includes an original picture of the reference unit in a reference frame and/or a target reconstructed picture of the reference unit. The initial reconstructed picture of the coding unit may be a reconstructed picture (namely, a reconstructed picture obtained through reconstruction based on second residual information of the coding unit and the first prediction information of the coding unit) output by a reconstruction module after the coding unit is encoded based on the encoding process in the embodiment of FIG. 2A.

For example, the motion complexity may be a difference or a similarity. In other words, the motion complexity of the picture of the coding unit relative to the picture of the reference unit may be a similarity between the picture of the coding unit and the picture of the reference unit, or may be a difference between the picture of the coding unit and the picture of the reference unit.

In a possible manner, a similarity between the picture of the coding unit and the picture of the reference unit may be determined, and the preset parameter of the coding unit is determined based on the similarity. When the similarity is greater than or equal to a similarity threshold, it indicates that the similarity between the picture of the coding unit and the picture of the reference unit is high. In this case, it may be determined that the motion complexity of the picture of the coding unit relative to the picture of the reference unit is low. A value of the preset parameter may be set to a first preset value. In other words, the first preset value may indicate that the motion complexity of the picture of the coding unit relative to the picture of the reference unit is low complexity. When the similarity is less than a similarity threshold, it indicates that the similarity between the picture of the coding unit and the picture of the reference unit is low. In this case, it may be determined that the motion complexity of the picture of the coding unit relative to the picture of the reference unit is high. A value of the preset parameter may be set to a second preset value. In other words, the second preset value may indicate that the motion complexity of the picture of the coding unit relative to the picture of the reference unit is high complexity. The similarity threshold may be set according to a requirement. If a similarity when two pictures are completely the same is 1, the similarity threshold may be a decimal less than 1 and greater than 0.

It should be noted that the first preset value is different from the second preset value. The first preset value may be greater than the second preset value, or the first preset value may be less than the second preset value. Specifically, this may be set according to a requirement. This is not limited in this application. In a possible manner, the first preset value and the second preset value may be numbers between 0 and 1 (both the first preset value and the second preset value may be 0 or 1). Optionally, a sum of the first preset value and the second preset value may be 1. The first preset value is 1, and the second preset value is 0; or the first preset value is 0, and the second preset value is 1. For another example, the first preset value is 0.8, and the second preset value is 0.2; or the first preset value is 0.2, and the second preset value is 0.8.

For example, the similarity may be determined in a plurality of manners, for example, calculating an error, and determining the similarity based on the error; or for another example, determining similarity calculation by using a similarity model. This is not limited in this application. In this application, an example in which the error is calculated to determine the similarity is used for description.

In a possible manner, an error between the picture of the coding unit and the picture of the reference unit may be calculated, and the similarity between the picture of the coding unit and the picture of the reference unit is determined based on the error between the picture of the coding unit and the picture of the reference unit. If the similarity when the two pictures are completely the same is 1, a difference between 1 and the error between the picture of the coding unit and the picture of the reference unit may be used as a similarity.

For example, the value of the preset parameter may be determined based on Formula (1):

$$mask = \begin{cases} 1 & error\left(X_1, X_2\right) \leq \varepsilon \\ 0 & else \end{cases} \qquad (1)$$

In Formula (1), **mask** represents the preset parameter, *error*( ) represents calculating the error, $X_1$ represents the picture of the coding unit, $X_2$ represents the picture of the reference unit, and $\varepsilon$ is an error threshold. The error threshold may be a difference between 1 and the similarity threshold.

In other words, in Formula (1), when the error between the picture of the coding unit and the picture of the reference unit is less than or equal to the error threshold, it is equivalent to that the similarity between the picture of the coding unit and the picture of the reference unit is greater than or equal to the similarity threshold. In this case, the value of the preset parameter is set to *1. else* in Formula (1) represents that the error between the picture of the coding unit and the picture of the reference unit is greater than the error threshold, and it is equivalent to that the similarity between the picture of the coding unit and the picture of the reference unit is less than the similarity threshold. In this case, the value of the preset parameter is set to 0.

For example, $X_1$ in Formula (1) is the initial reconstructed picture of the coding unit, and $X_2$ is the target reconstructed picture of the reference unit.

For example, $X_1$ in Formula (1) is the original picture of the coding unit, and $X_2$ is the original picture of the reference unit.

For example, $X_1$ in Formula (1) is the initial reconstructed picture of the coding unit, and $X_2$ is the original picture of the reference unit.

For example, $X_1$ in Formula (1) is the original picture of the coding unit, and $X_2$ is the target reconstructed picture of the reference unit.

In a possible manner, a third optical flow of the coding unit may be obtained; second prediction information of the coding unit is determined based on the third optical flow of the coding unit and the target reconstructed picture of the reference unit; and the similarity between the picture of the coding unit and the picture of the reference unit is determined based on an error between the second prediction information of the coding unit and the picture of the coding unit.

In a possible implementation, the initial reconstructed picture of the coding unit and the target reconstructed picture of the reference unit may be input into the motion estimation module, and the motion estimation module performs motion estimation, to output the third optical flow of the coding unit. For this, refer to Formula (2):

$$flow = FLOW\left(X_{12}, X_{22}\right) \qquad (2)$$

In Formula (2), **flow** represents the third optical flow of the coding unit, *FLOW*( ) represents motion estimation, $X_{12}$ represents the initial reconstructed picture of the coding unit, and $X_{22}$ represents the target reconstructed picture of the reference unit.

In a possible manner, feature information of a first optical flow of the coding unit may be input into an optical flow decoding model (the optical flow decoding model is pre-trained, and is different from the optical flow decoding module in FIG. 2A), and the optical flow decoding model decodes (that is, performs feature restoration on) the feature information of the first optical flow, to output the third optical flow of the coding unit. For this, refer to Formula (3):

$$flow = Decflow\left(feature\ information\ of\ a\ first\ optical\ flow\ of\ a\ coding\ unit\right) \qquad (3)$$

In Formula (3), **flow** represents the third optical flow of the coding unit, and *Decflow*( ) represents decoding (or feature restoration).

Then, the second prediction information of the coding unit may be determined based on Formula (4):

$$F = wrap\left(X_{22}, flow, 'neareast'\right) \qquad (4)$$

In Formula (4), *F* represents the second prediction information of the coding unit, $X_{22}$ represents the target reconstructed picture of the reference unit, *flow* represents the third optical flow of the coding unit, *neareast* represents that a nearest interpolation manner is used, and *wrap*( ) represents picture transformation.

Then, the preset parameter of the coding unit may be determined based on Formula (5):

$$mask = \begin{cases} 1 & error(F, X_{11}) \le \varepsilon \\ 0 & else \end{cases} \qquad (5)$$

In Formula (5), **mask** represents the preset parameter of the coding unit, *error*( ) represents calculating the error, $X_{11}$ represents the original picture of the coding unit, *F* represents the second prediction information of the coding unit, and $\varepsilon$ is an error threshold. The error threshold may be the difference between 1 and the similarity threshold.

In other words, in Formula (5), when an error between the second prediction information and the original picture of the coding unit is less than or equal to the error threshold, it is equivalent to that a similarity between the second prediction information and the original picture of the coding unit is greater than or equal to the similarity threshold. In this case, the value of the preset parameter is set to *1*. *else* in Formula (5) represents that the error between the second prediction information and the original picture of the coding unit is greater than the error threshold, and it is equivalent to that the similarity between the second prediction information and the original picture of the coding unit is less than the similarity threshold. In this case, the value of the preset parameter is set to 0.

It should be understood that the error may be calculated in another manner. This is not limited in this application.

S305: Encode the preset parameter of the coding unit.

It should be noted that a sequence of encoding the residual information and encoding the preset parameter is not limited in this application. In other words, a sequence of performing S303 and S305 is not limited in this application.

For example, both the AI video encoding framework and the AI video encoding framework may further include a fusion module. The fusion module may be an independent module, or may be integrated into a reconstruction module. This is not limited in this application.

For example, after the preset parameter of the coding unit is obtained, the preset parameter of the coding unit may be input into the fusion module, and the fusion module fuses reconstructed picture information of the reference unit and reconstructed picture information of the coding unit based on the preset parameter of the coding unit, to obtain a target reconstructed picture of the coding unit. In addition, S305 may be performed to encode the preset parameter of the coding unit to obtain a preset parameter bitstream, to transmit the preset parameter of the coding unit to a decoder side, and apply the preset parameter to the fusion module of the decoder side, so that the fusion module of the decoder side may fuse reconstructed picture information of the reference unit and reconstructed picture information of the coding unit based on the preset parameter of the coding unit, to obtain a target reconstructed picture of the coding unit.

The reconstructed picture information of the reference unit may include a target reconstructed picture of the reference unit or feature information of the target reconstructed picture of the reference unit, and the reconstructed picture information of the coding unit may include an initial reconstructed picture of the coding unit or feature information of the initial reconstructed picture of the coding unit.

For example, an entropy encoding module of the AI video encoding framework may further include a third entropy encoding module, and the AI video encoding framework further includes a third entropy estimation module. The third entropy encoding module may perform S305.

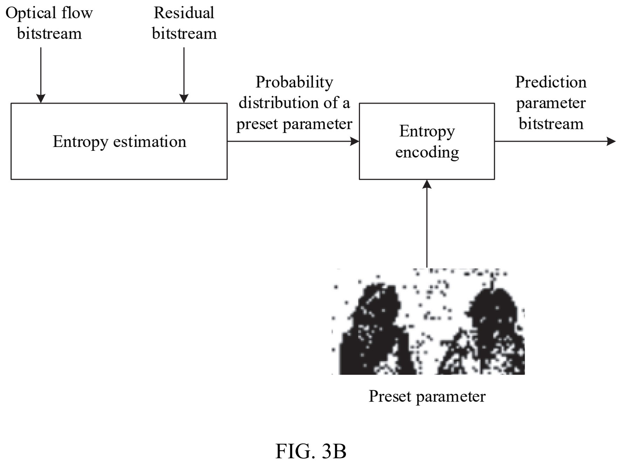

In a possible manner, the preset parameter of the coding unit may be directly encoded, to obtain the preset parameter bitstream. In this way, the decoder side can obtain the preset parameter of the current frame by decoding the preset parameter bitstream. For example, entropy estimation may be performed on the preset parameter of the coding unit, to obtain a probability distribution of the preset parameter; and then entropy encoding is performed on the preset parameter of the coding unit based on the probability distribution of the preset parameter, to obtain the preset parameter bitstream. Specifically, as shown in FIG. 3B, the third entropy estimation module may determine the probability distribution of the preset parameter of the coding unit based on an optical flow bitstream and/or the residual bitstream. It should be understood that the preset parameter of the coding unit may be encoded in another manner. This is not limited in this application.

In a possible manner, feature extraction may be performed on the preset parameter of the coding unit, to obtain feature information of the preset parameter of the coding unit; and then the feature information of the preset parameter of the coding unit is encoded, to obtain the preset parameter bitstream. In this way, the decoder side can perform feature restoration based on information obtained from the preset parameter bitstream through decoding, to obtain the preset parameter of the current frame. A manner of encoding the feature information of the preset parameter of the coding unit is similar to a manner of encoding the preset parameter of the coding unit. Details are not described herein again.

For example, a manner of fusing the reconstructed picture information of the reference unit and the reconstructed picture information of the coding unit to obtain the target reconstructed picture of the coding unit may be as follows: determining a weight of the reconstructed picture information of the reference unit and a weight of the reconstructed picture information of the coding unit based on the preset parameter of the coding unit; performing weighted calculation on the reconstructed picture information of the reference unit and the reconstructed picture information of the coding unit based on the weight of the reconstructed picture information of the reference unit and the weight of the reconstructed picture information of the coding unit, to obtain the target reconstructed picture of the coding unit.

In this case, if the first preset value is greater than the second preset value, when the first preset value and the second preset value are numbers between 0 and 1 (both the first preset value and the second preset value may be 0 or 1), the value of the preset parameter of the coding unit may be used as the weight of the reconstructed picture information of the reference unit, and a difference between 1 and the value of the preset parameter is used as the weight of the reconstructed picture information of the coding unit. When both the first preset value and the second preset value are numbers greater than 1, the first preset value and the second preset value may be converted into numbers between 0 and 1, a value that is of the preset parameter of the coding unit and that is obtained through conversion is used as the weight of the reconstructed picture information of the reference unit, and a difference between 1 and the value that is of the preset parameter of the coding unit and that is obtained through conversion is used as the weight of the reconstructed picture information of the coding unit. In this case, fusion may be performed based on Formula (6):

$$G = mask * Y1 + (1 - mask) * Y2 \qquad (6)$$

If the second preset value is greater than the first preset value, fusion may be performed based on Formula (7):

$$G = mask * Y2 + (1 - mask) * Y1 \qquad (7)$$

In Formula (6) and formula (7), G represents the target reconstructed picture of the coding unit or the feature information of the target reconstructed picture of the coding unit, $Y1$ is the target reconstructed picture of the reference unit or the feature information of the target reconstructed picture of the reference unit, and $Y2$ is the initial reconstructed picture of the coding unit or the feature information of the initial reconstructed picture of the coding unit.

It should be understood that, when $Y1$ is the target reconstructed picture of the reference unit, $Y2$ is the initial reconstructed picture of the coding unit. When $Y1$ is the feature information of the target reconstructed picture of the reference unit, $Y2$ is the feature information of the initial reconstructed picture of the coding unit.

When the motion complexity of the picture of the coding unit relative to the picture of the reference unit is low complexity, mask in Formula (6) is 1, and mask in Formula (7) is 0, fusing the reconstructed picture information of the reference unit and the reconstructed picture information of the coding unit may be copying the reconstructed picture information of the reference unit to the coding unit, to obtain the target reconstructed picture of the coding unit. In this way, an error introduced by inter prediction and entropy encoding on the residual information can be compensated for, and the error in the current frame is reduced, thereby reducing the accumulated error in the subsequent frame, and ensuring time sequence stability.

When the motion complexity of the picture of the coding unit relative to the picture of the reference unit is high complexity, mask in Formula (6) is 0, and mask in Formula (7) is 1, the target reconstructed picture that is of the coding unit and that is obtained by fusing the reconstructed picture information of the reference unit and the reconstructed picture information of the coding unit is essentially the initial reconstructed picture of the coding unit. Because the motion complexity of the picture of the coding unit relative to the picture of the reference unit is high complexity, if the reconstructed picture information of the reference unit is copied to the coding unit, quality of the obtained target reconstructed picture of the coding unit is low. Therefore, the initial reconstructed picture of the coding unit that is obtained through reconstruction may be used as the initial reconstructed picture of the coding unit. In this way, quality of the reconstructed picture of the coding unit can be ensured.

When the motion complexity of the picture of the coding unit relative to the picture of the reference unit is low complexity, and mask in Formula (6) and mask in Formula (7) are another value other than 0 and 1 (namely, the first preset value and the second preset value are values other than 0 and 1), in the target picture of the coding unit obtained by fusing the reconstructed picture information of the reference unit and the reconstructed picture information of the coding unit, the reconstructed picture information of the coding unit and the reconstructed picture information of the reference unit each account for a specific proportion. In this way, the error introduced by inter prediction and entropy encoding on the residual information can also be compensated for to some extent, and the error in the current frame is reduced, thereby reducing the accumulated error in the subsequent frame to some extent, and ensuring time sequence stability. In addition, quality of the target reconstructed picture of the coding unit can be further ensured to some extent.

For example, a manner of fusing the reconstructed picture information of the reference unit and the reconstructed picture information of the coding unit to obtain the target reconstructed picture of the coding unit may be as follows: inputting the preset parameter of the coding unit, the original picture of the coding unit, and the reconstructed picture information of the reference unit into the fusion model, to obtain the target reconstructed picture of the coding unit. In this case, the first preset value and the second preset value are not limited. The fusion model is pre-trained, and has a capability of generating high-quality information (for example, a high-quality picture or high-quality feature information). In this way, the error in the coding unit in the current frame can be reduced, thereby reducing the accumulated error in the subsequent frame, and ensuring the time sequence stability. In addition, quality of the target reconstructed picture of the coding unit can be further ensured to some extent.

It should be noted that when the picture of the coding unit in S304 does not include the initial reconstructed picture of the coding unit, a sequence of performing S304 and any one of S301 to S303 is not limited in this application. When the picture of the coding unit in S304 includes the initial reconstructed picture of the coding unit, S304 is performed after S303 in this application.

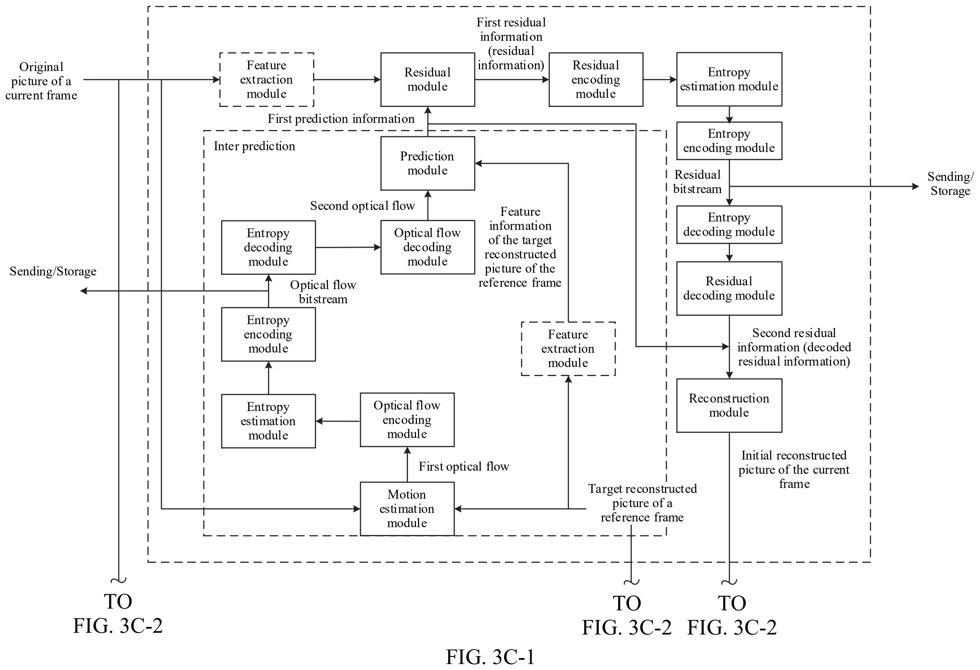

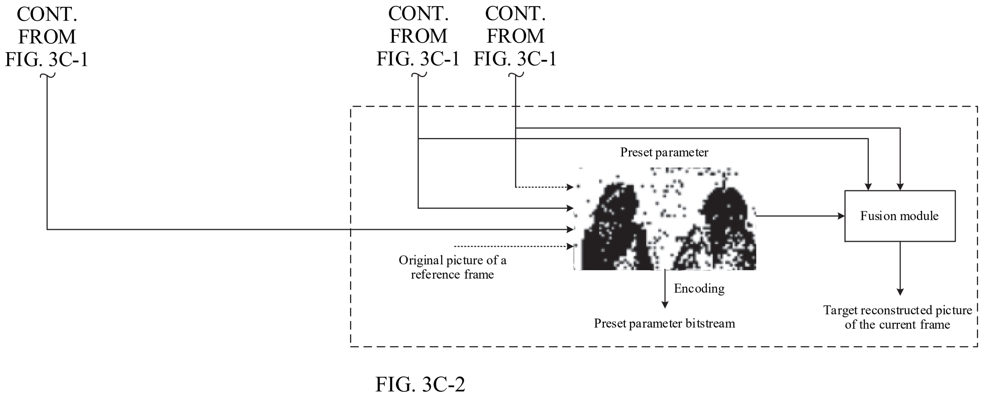

FIG. 3C is a diagram of an example encoding process. FIG. 3C is described by using a current frame as an example. In FIG. 3C, a first preset value is 1, a second preset value is 0, reconstructed picture information of a reference unit used for fusion is a target reconstructed picture of the reference frame, and reconstructed picture information of a coding unit used for fusion is an initial reconstructed picture of the current frame.

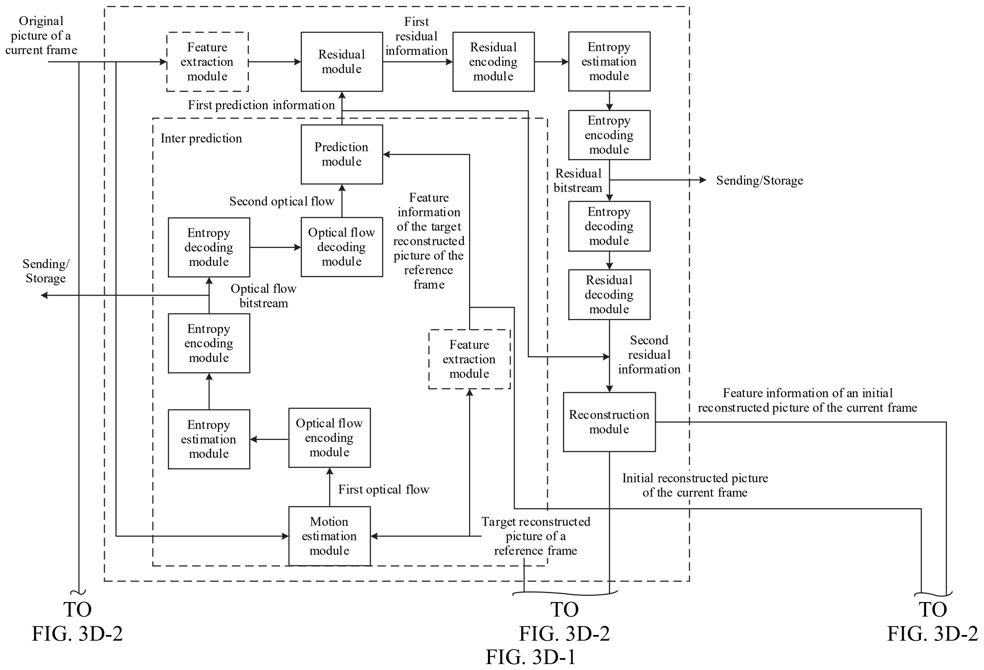

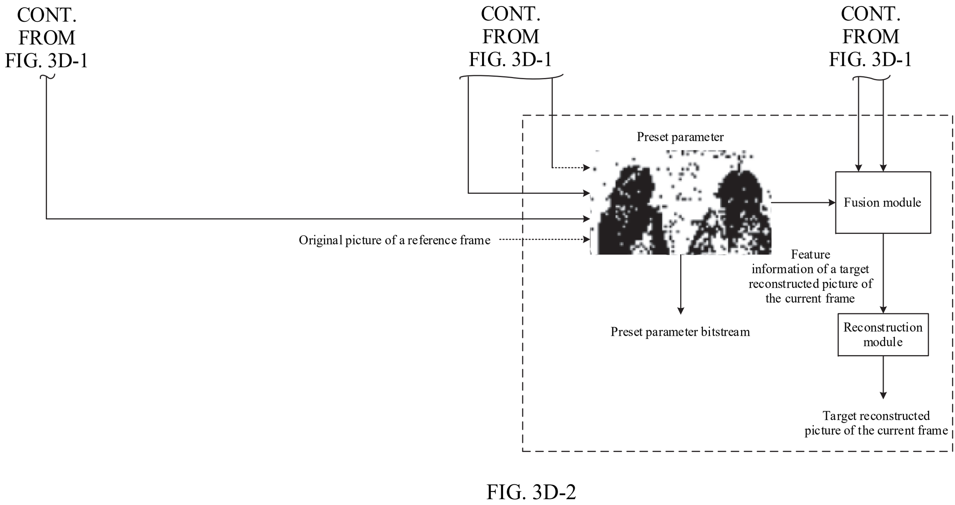

FIG. 3D is a diagram of an example encoding process. FIG. 3D is described by using a current frame as an example. In FIG. 3D, a first preset value is 1, a second preset value is 0, a reconstructed picture information of a reference unit used for fusion is feature information of a target reconstructed picture of the reference frame, and reconstructed picture information of a coding unit used for fusion is feature information of an initial reconstructed picture of the current frame.

As shown in FIG. 3C and FIG. 3D, for example, an encoding process in a dashed box in a thick line on an upper left side corresponds to S301 to S303. For details, refer to descriptions in FIG. 2A. Details are not described herein again. A processing process in a dashed box in a thick line on a lower right side corresponds to S304 to S305. In the preset parameter of the current frame in FIG. 3C and FIG. 3D, a black point indicates that the corresponding value of the preset parameter of the coding unit is 0, and a white point indicates that the corresponding value of the preset parameter of the coding unit is 1.

It should be noted that, in a possible manner, the residual bitstream and the preset parameter bitstream are two bitstreams. In a possible manner, the residual bitstream and the preset parameter bitstream may be two parts of a same bitstream. In other words, a same bitstream carries the residual information and the preset parameter.

FIG. 4A is a diagram of an example decoding process. The decoding process in the embodiment of FIG. 4A corresponds to the encoding process in the embodiment of FIG. 3A.

S401: Receive a bitstream.

For example, a bitstream received by a decoder side may include an optical flow bitstream, a residual bitstream, and a preset parameter bitstream.

S402: Obtain a preset parameter of a coding unit in a current frame based on the bitstream.

In a possible manner, the preset parameter of the coding unit may be directly obtained from the preset parameter bitstream through decoding.

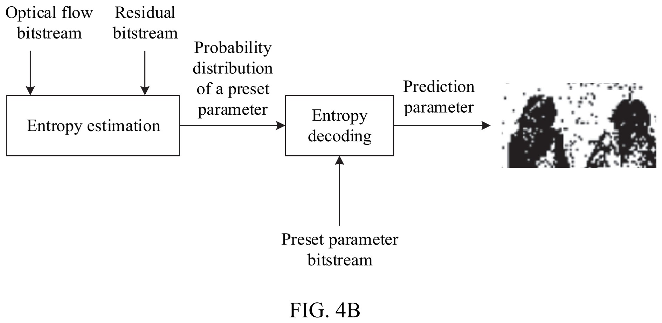

For example, an encoder side determines a probability distribution of the preset parameter of the coding unit based on the optical flow bitstream and/or the residual bitstream; and then performs entropy encoding on the preset parameter of the coding unit based on the probability distribution of the preset parameter, to obtain the preset parameter bitstream. As shown in FIG. 4B, the decoder side may determine the probability distribution of the preset parameters of the coding unit based on the optical flow bitstream and/or the residual bitstream, and then may perform entropy decoding on the preset parameter bitstream based on the probability distribution of the preset parameter, to obtain the preset parameter of the coding unit.

In a possible manner, processing may be performed based on information obtained from the preset parameter bitstream through decoding, to obtain the preset parameter of the coding unit.

It should be understood that, when the residual bitstream needs to be used to determine the probability distribution of the preset parameter of the coding unit in S402, S403 may be performed before S402. When the optical flow bitstream needs to be used to determine the probability distribution of the preset parameter of the coding unit in S402, a second optical flow of the coding unit may be first obtained based on the optical flow bitstream, and then S402 is performed.

S403: Obtain decoded residual information of the coding unit based on the bitstream.

For example, for S403, refer to the descriptions of the decoding process in FIG. 2B. Details are not described herein again. It should be noted that the decoded residual information of the coding unit in S403 corresponds to the second residual information of the coding unit in the embodiment of FIG. 2B.

It should be noted that S402 and S403 may be performed by a decoding module in an AI video decoding framework. The decoding module may include the second entropy estimation module, the second entropy decoding module, and the residual decoding module (the three modules are configured to perform S403) in FIG. 2B, and further include a third entropy decoding module (the third entropy decoding module is an entropy decoding module in an AI video decoding framework, and the third entropy decoding module is configured to perform S402).

S404: Perform inter prediction on the coding unit, to obtain first prediction information of the coding unit.

For example, for S404, refer to the descriptions of the inter prediction process in FIG. 2B. Details are not described herein again. It should be noted that S404 may be performed by an inter prediction module in the AI video decoding framework. The inter prediction module may include the optical flow decoding module, the first entropy estimation module, and the prediction module in FIG. 2B.

It should be noted that a sequence of performing S404 and S403 is not limited in this application. When S403 needs to be implemented based on the first prediction information of the coding unit, S404 may be performed before S403.

S405: Perform reconstruction based on the decoded residual information of the coding unit and the first prediction information, to determine reconstructed picture information of the coding unit.

For example, for S405, refer to the descriptions of the reconstruction process performed by the reconstruction module in FIG. 2B. Details are not described herein again.

S406: Fuse the reconstructed picture information of the coding unit and reconstructed picture information of a reference unit based on the preset parameter, to obtain a target reconstructed picture of the coding unit.

For example, a fusion process in S406 is similar to the fusion process in the embodiment of FIG. 3A. Details are not described herein again.

In the following, an AI video encoding/decoding method in this application, a conventional encoding/decoding method (for example, H266) in the conventional technology, and an AI video encoding/decoding method in the conventional technology are tested by using a test set, to compare effect of the AI video encoding/decoding method in this application and effect of the AI video encoding/decoding method in the conventional technology.

For example, there are five test sets: two 4k test sets (a motion type of one 4K (A1) test set is a complex motion type, and a motion type of the other 4K test set (A2) is a simple motion type), a 1080p test set, an 832*480 test set (target object motion), and a 770p test set (conference video). A peak signal to noise ratio (Peak Signal to Noise Ratio, PSNR) of the AI video encoding/decoding method in this application relative to H266 and a PSNR of the AI video encoding/decoding method in the conventional technology relative to H266 may be shown in Table 1.

**Table 1**

|  | PSNR of an AI video encoding/decoding method in the conventional technology relative to H266 | | | | PSNR of an AI video encoding/decoding method in this application relative to H266 | | | |
|---|---|---|---|---|---|---|---|---|
|  | Y-PSNR | U-PSNR | V-PSNR | YUV-PSNR | Y-PSNR | U-PSNR | V-PSNR | YUV-PSNR |
| 4K (A1) | -6.28% | 104.6% | -5.35% | -0.94% | -6.36% | 96.20% | -5.58% | -0.90% |
| 4K (A2) | -22.37% | -3.75% | 17.58% | -18.86% | -23.09% | -5.83% | 19.17% | -19.72% |
| 1080p | -22.12% | -36.72% | -42.59% | -25.46% | -22.75% | -34.77% | -41.38% | -25.64% |
| 832*480 | -19.73% | -38.29% | -31.06% | -22.35% | -19.75% | -37.69% | -30.49% | -22.22% |
| 720p | -9.69% | -7.67% | -15.72% | -10.27% | -17.26% | -20.56% | -21.86% | -17.88% |
| Average value | -17.01% | -3.18% | -19.32% | -17.05% | -18.49% | -6.04% | -19.65% | -18.48% |

As shown in Table 1, Y-PSNR represents a PSNR of a Y component, U-PSNR represents a PSNR of a U component, and V-PSNR represents a PSNR of a V component.

It should be noted that a picture included in video data used for testing in the test set is a YUV420 picture. Y component:U component:V component=8:1:1. Therefore, only Y-PSNR needs to be focused om in Table 1. For the five test sets, the PSNR of the AI video encoding/decoding method in this application is superior to the PSNR of the AI video encoding/decoding method in the conventional technology. Particularly, for the 720p test set, the PSNR of the AI video encoding/decoding method in this application is 7.54% higher than the PSNR of the AI video encoding/decoding method in the conventional technology. In other words, according to the encoding/decoding method in this application, an accumulated error in a video with low motion complexity (namely, motion complexity of a picture of the coding unit relative to a picture of the reference unit is low complexity) can be reduced while rate-distortion (Rate-Distortion, RD) performance of video data with high motion complexity (namely, the motion complexity of the picture of the coding unit relative to the picture of the reference unit is high complexity) is ensured or improved to some extent.

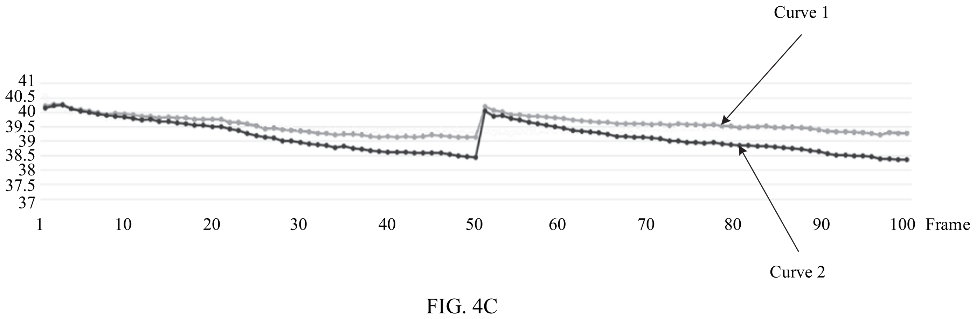

FIG. 4C is a diagram of example test video reconstruction quality. In FIG. 4C, a horizontal coordinate is a frame number of a picture frame, and a vertical coordinate is Y-PSNR. FIG. 4B shows Y-PNSR of each frame of picture in two groups of pictures (each group of pictures includes 50 frames of pictures).

As shown in FIG. 4C, a curve 1 shows Y-PSNR of a reconstructed picture obtained through encoding/decoding in the AI video encoding/decoding method in this application, and a curve 2 shows Y-PSNR of a reconstructed picture obtained through encoding/decoding in the AI video encoding/decoding method in the conventional technology. It can be learned from a comparison between the curve 1 and the curve 2 that, compared with the conventional technology, in this application, the reconstructed picture has more stable quality, and a smaller accumulated error, namely, higher quality of the reconstructed picture.

For example, on the basis of the embodiment of FIG. 3A, adaptive bitrate encoding may be further performed on the residual information of the coding unit based on the preset parameter of the coding unit, to reduce bitrate overheads.

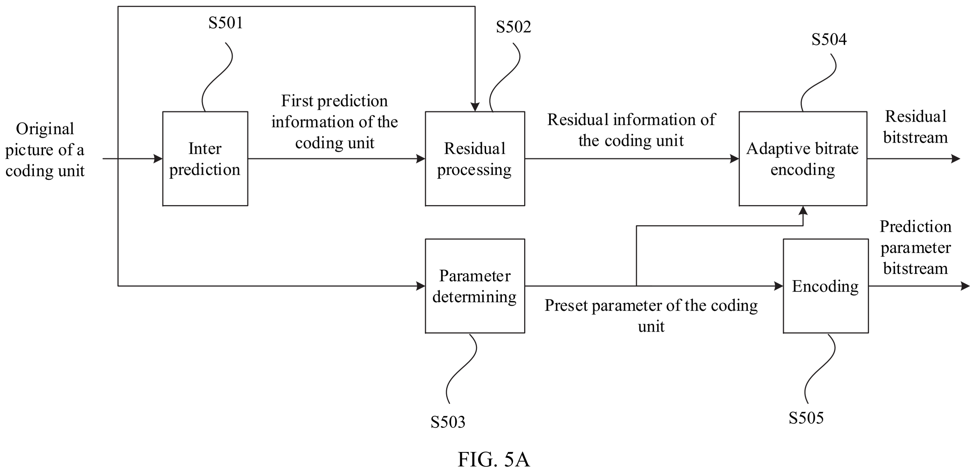

FIG. 5A is a diagram of an example encoding process.

S501: Perform inter prediction on a coding unit in a current frame, to obtain first prediction information of the coding unit.

S502: Determine residual information of the coding unit based on the first prediction information and an original picture of the coding unit.

S503: Determine a preset parameter of the coding unit.

For example, for S501 to S503, refer to the descriptions of S301, S302, and S304. Details are not described herein again. It should be noted that the residual information of the coding unit in S502 corresponds to the first residual information of the coding unit in the embodiment of FIG. 2A.

S504: Perform adaptive bitrate encoding on the residual information of the coding unit based on the preset parameter.

For example, when a value of the preset parameter of the coding unit is a first preset value, low-bitrate encoding may be performed on the residual information of the coding unit, to obtain a residual bitstream; or when a value of the preset parameter of the coding unit is a second preset value, high-bitrate encoding may be performed on the residual information of the coding unit, to obtain a residual bitstream. To be specific, a bitrate of encoding the residual information is adaptively adjusted based on the preset parameter of the coding unit. In a reconstruction process, reconstructed picture information of a reference unit and reconstructed picture information of the coding unit are fused, to generate a target reconstructed picture of the coding unit. Therefore, even if low-bitrate encoding is performed on residual information of the current frame, quality of the target reconstructed picture of the coding unit can be ensured. Further, in the embodiment of FIG. 5A, bitrate overheads can be reduced to some extent in a case of same quality.

Specifically, the residual information is encoded based on a first bitrate parameter when the value of the preset parameter is the first preset value; or the residual information is encoded based on a second bitrate parameter when the value of the preset parameter is the second preset value. A target bitrate of a bitstream obtained by encoding the residual information based on the second bitrate parameter is greater than a target bitrate of a bitstream obtained by encoding the residual information based on the first bitrate parameter.

S505: Encode the preset parameter of the coding unit.

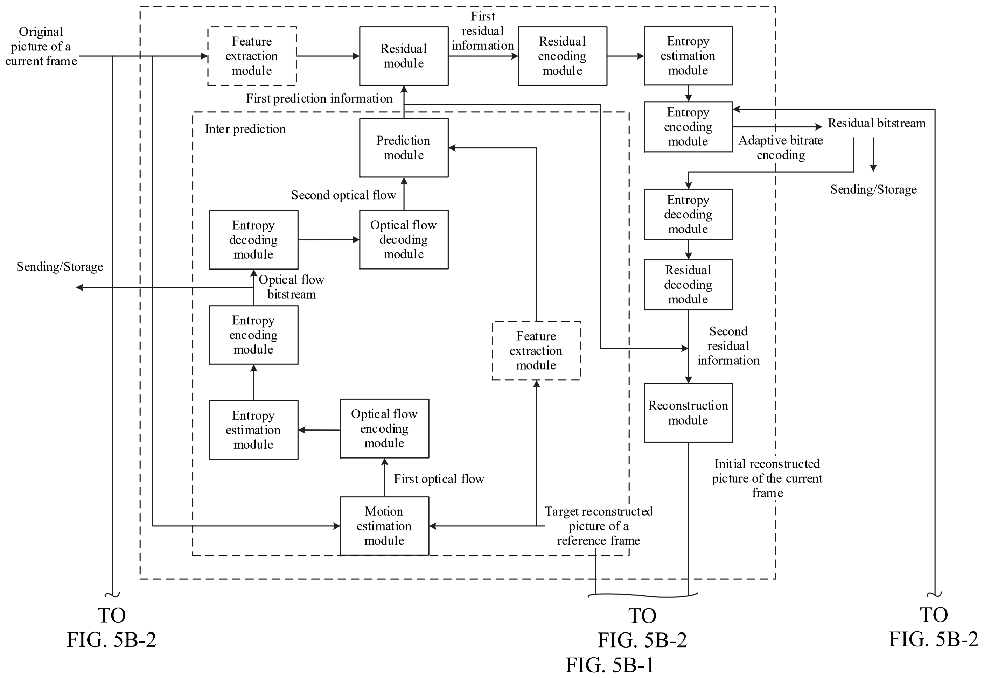

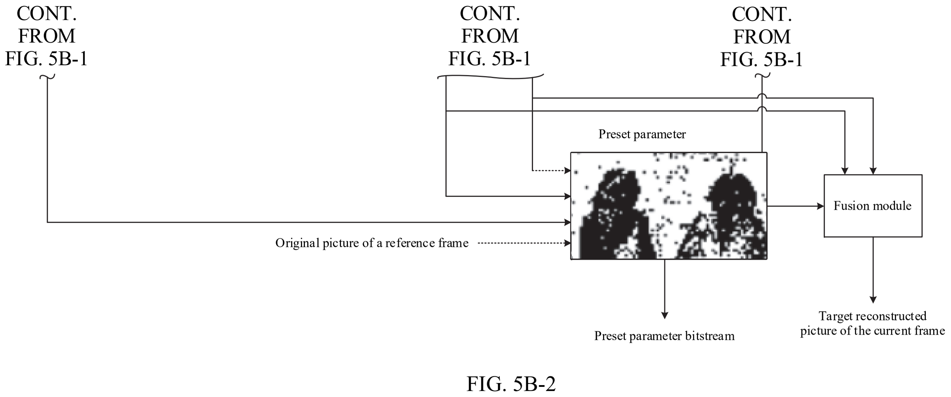

FIG. 5B is a diagram of an example encoding process. FIG. 5B is shown on the basis of FIG. 3B. A second entropy encoding module may perform adaptive bitrate encoding on residual information of a coding unit based on a residual probability distribution and a preset parameter of the coding unit, to obtain a residual bitstream.

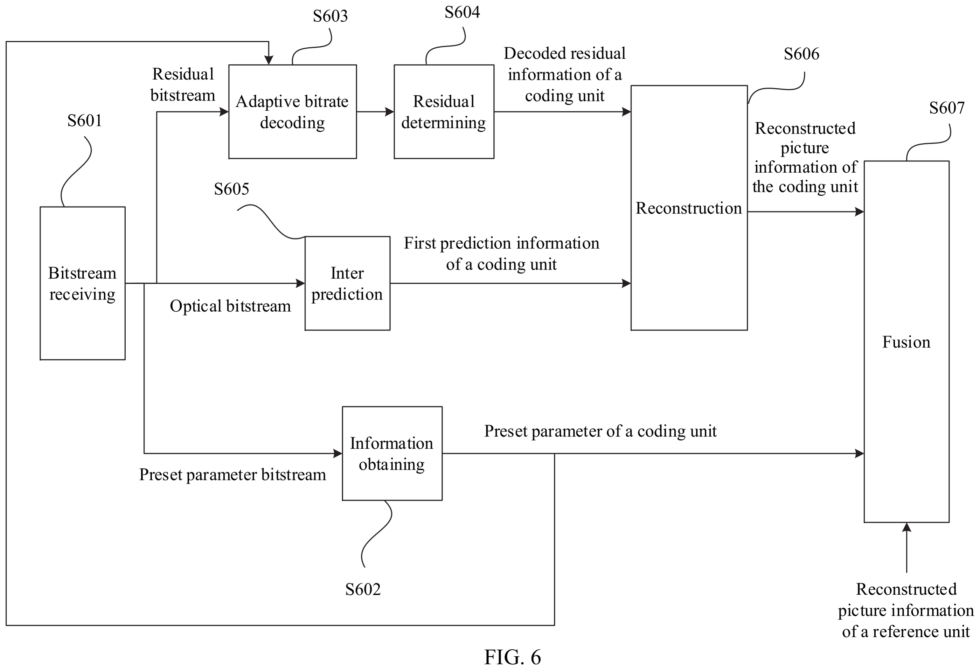

FIG. 6 is a diagram of an example decoding process. The decoding process in the embodiment of FIG. 6 corresponds to the encoding process in the embodiment of FIG. 5A.

S601: Receive a bitstream.

S602: Obtain a preset parameter of a coding unit in a current frame based on the bitstream.

For example, for S601 and S602, refer to the descriptions of S401 and S402. Details are not described herein again.

S603: Perform adaptive bitrate decoding on a residual bitstream based on the preset parameter of the coding unit.

Specifically, when a value of the preset parameter of the coding unit is a first preset value, the residual bitstream is decoded based on a first bitrate parameter; or when a value of the preset parameter of the coding unit is a second preset value, the residual bitstream is decoded based on a second bitrate parameter.

S604: Determine decoded residual information of the coding unit based on information obtained by performing adaptive bitrate decoding on the residual bitstream.

For example, the information obtained by performing adaptive bitrate decoding on the residual bitstream may be input into a residual decoding module, and is processed by the residual decoding module, to output the decoded residual information of the coding unit.

S605: Perform inter prediction on the coding unit, to obtain first prediction information of the coding unit.

S606: Perform reconstruction based on the decoded residual information of the coding unit and the first prediction information, to determine reconstructed picture information of the coding unit.

S607: Fuse the reconstructed picture information of the coding unit and reconstructed picture information of a reference unit based on the preset parameter, to obtain a target reconstructed picture of the coding unit.

For example, for S605 and S607, refer to the descriptions of S404 and S406. Details are not described herein again.

It should be noted that the decoded residual information of the coding unit in the embodiment of FIG. 6 corresponds to the second residual information of the coding unit in the embodiment of FIG. 2B.

For example, on the basis of FIG. 3A, adaptive bitrate encoding may be further performed on a first optical flow of the coding unit based on the preset parameter of the coding unit, to reduce bitrate overheads.

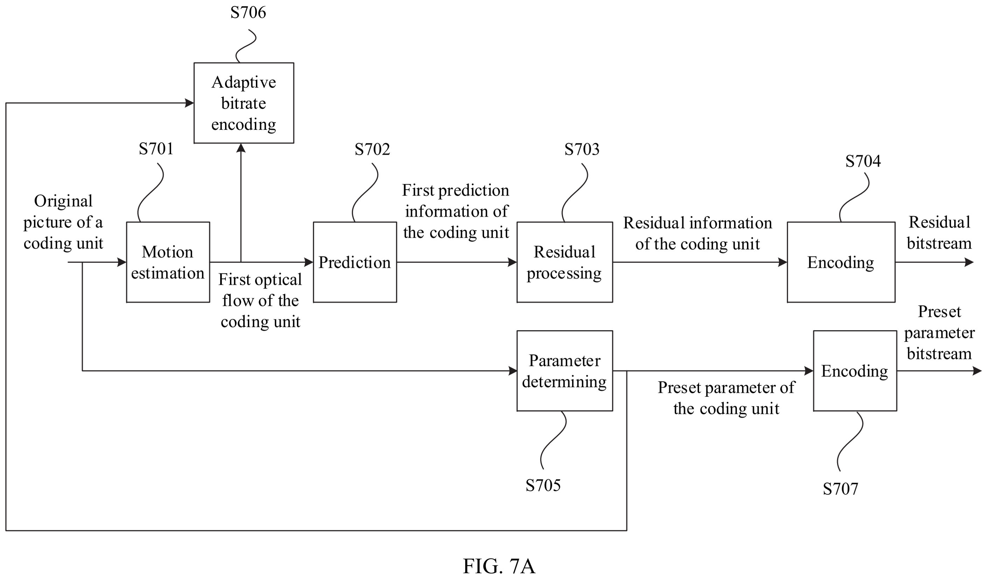

FIG. 7A is a diagram of an example encoding process.

S701: Perform motion estimation on a coding unit in a current frame, to obtain a first optical flow of the coding unit.

S702: Predict the coding unit in the current frame based on the first optical flow of the coding unit, to obtain first prediction information of the coding unit.

S703: Determine residual information of the coding unit based on the first prediction information and an original picture of the coding unit.

S704: Encode residual data of the coding unit.

S705: Determine a preset parameter of the coding unit.

For example, for S701 and S705, refer to the descriptions of S301 and S304. Details are not described herein again.

S706: Perform adaptive bitrate encoding on the first optical flow of the coding unit based on the preset parameter of the coding unit.

For example, performing adaptive bitrate encoding on the first optical flow of the coding unit in S706 may be performing adaptive bitrate encoding on feature information of the first optical flow of the coding unit.

For example, when a value of the preset parameter of the coding unit is a first preset value, low-bitrate encoding may be performed on the feature information of the first optical flow of the coding unit, to obtain an optical flow bitstream; or when a value of the preset parameter of the coding unit is a second preset value, high-bitrate encoding may be performed on the feature information of the first optical flow of the coding unit, to obtain an optical flow bitstream. To be specific, a bitrate of encoding the first optical flow is adaptively adjusted based on the preset parameter of the coding unit. In a reconstruction process, reconstructed picture information of a reference unit and reconstructed picture information of the coding unit are fused, to generate a target reconstructed picture of the coding unit. Therefore, even if low-bitrate encoding is performed on the feature information of the first optical flow of the current frame, quality of the target reconstructed picture of the coding unit can be ensured. Further, in the embodiment of FIG. 7A, bitrate overheads can be reduced to some extent in a case of same quality.

Specifically, when the value of the preset parameter is the first preset value, the feature information of the first optical flow is encoded based on a third bitrate parameter; or when the value of the preset parameter is the second preset value, the feature information of the first optical flow is encoded based on a fourth bitrate parameter. A target bitrate of a bitstream obtained by encoding the first optical flow based on the fourth bitrate parameter is greater than a target bitrate of a bitstream obtained by encoding the first optical flow based on the third bitrate parameter.

S707: Encode the preset parameter of the coding unit.

It should be noted that the residual information of the coding unit in the embodiment of FIG. 7A corresponds to the first residual information of the coding unit in FIG. 2A.

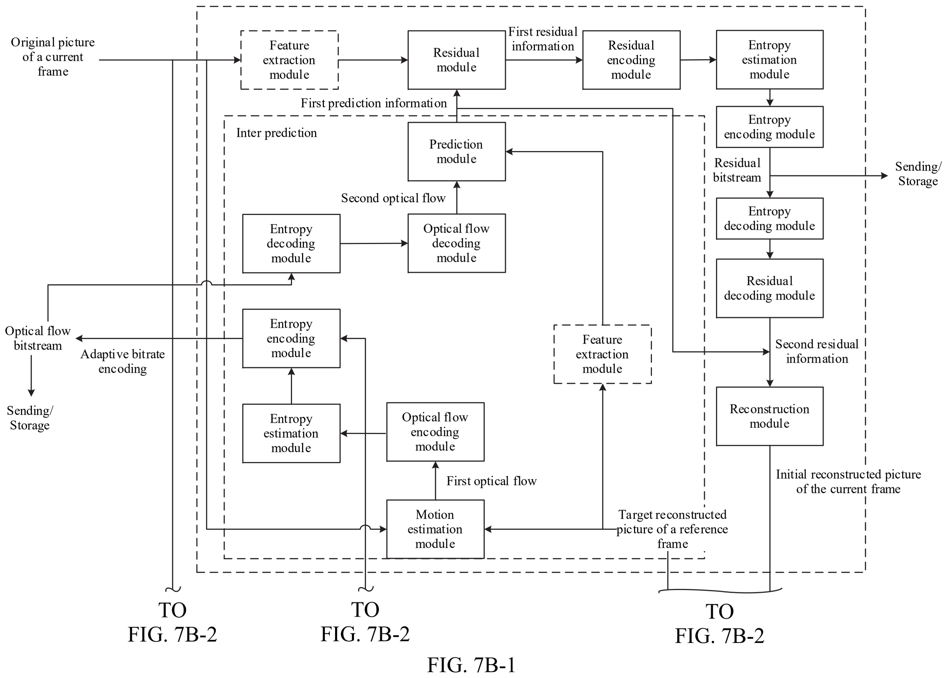

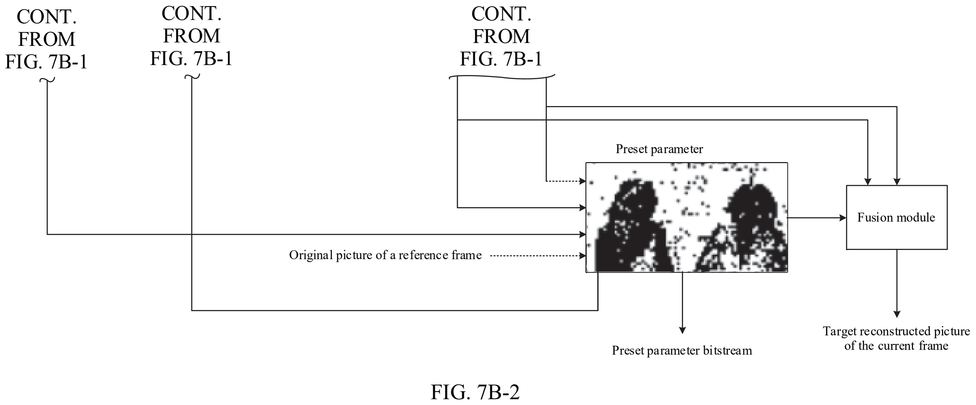

FIG. 7B is a diagram of an example encoding process. FIG. 7B is shown on the basis of FIG. 3B. A first entropy encoding module may perform adaptive bitrate encoding on feature information of a first optical flow of a coding unit based on an optical flow probability distribution and a preset parameter of the coding unit, to obtain an optical flow bitstream.

It should be noted that a sequence of encoding the first optical flow, encoding residual information, and encoding the preset parameter is not limited in this application. In other words, a sequence of performing S704, S706, and S707 is not limited in this application.

It should be noted that, in a possible manner, the optical flow bitstream, a residual bitstream, and a preset parameter bitstream are three bitstreams. In a possible manner, the optical flow bitstream, the residual bitstream, and the preset parameter bitstream may be three parts of a same bitstream. In other words, a same bitstream carries the residual information, the preset parameter, and the first optical flow. In a possible manner, the residual bitstream and the preset parameter bitstream may be two parts of a same bitstream, and the optical flow bitstream is another bitstream. In a possible manner, the residual bitstream and the optical flow bitstream may be two parts of a same bitstream, and the preset parameter bitstream is another bitstream. In a possible manner, the preset parameter bitstream and the optical flow bitstream may be two parts of a same bitstream, and the residual bitstream is another bitstream. This is not limited in this application.

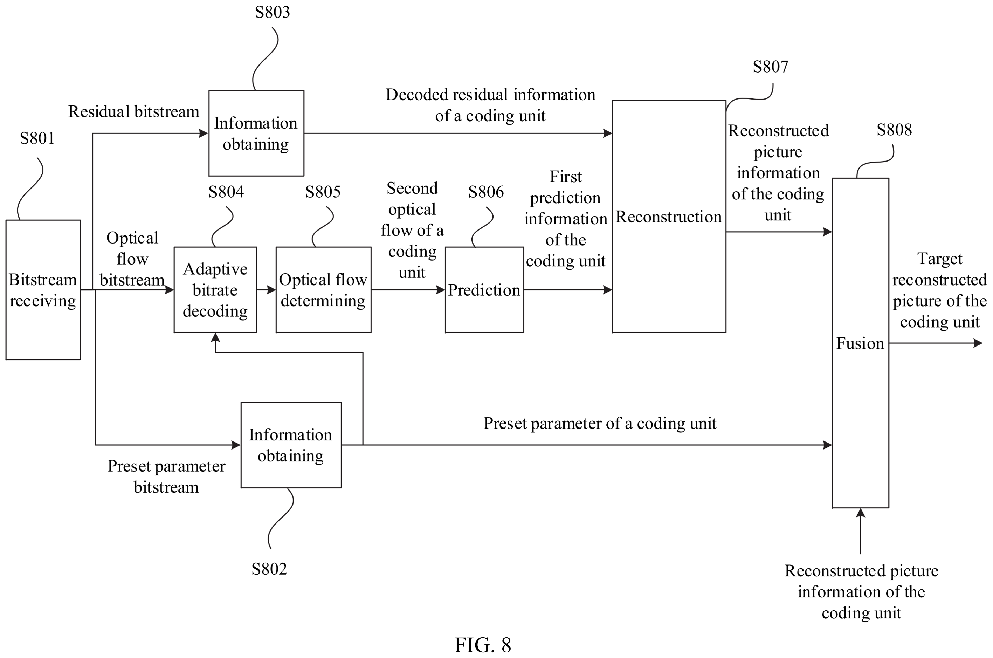

FIG. 8 is a diagram of an example decoding process. The decoding process in the embodiment of FIG. 8 corresponds to the encoding process in the embodiment of FIG. 7A.

S801: Receive a bitstream.

S802: Obtain a preset parameter of a coding unit in a current frame based on the bitstream.

S803: Obtain decoded residual information of the coding unit based on the bitstream.

For example, for S801 to S803, refer to the descriptions of S401 to S403. Details are not described herein again.

S804: Perform adaptive bitrate decoding on an optical flow bitstream based on the preset parameter of the coding unit.

Specifically, when a value of the preset parameter of the coding unit is a first preset value, the optical flow bitstream is decoded based on a third bitrate parameter; or when a value of the preset parameter of the coding unit is a second preset value, the optical flow bitstream is decoded based on a fourth bitrate parameter.

S805: Determine a second optical flow of the coding unit based on information obtained by performing adaptive bitrate decoding on the optical flow bitstream.

For example, the information obtained by performing adaptive bitrate decoding on the optical flow bitstream may be input into an optical flow decoding module, and is processed by the optical flow decoding module, to output the second optical flow of the coding unit.

S806: Predict the coding unit based on the second optical flow of the coding unit, to obtain first prediction information of the coding unit.

S807: Perform reconstruction based on the decoded residual information of the coding unit and the first prediction information, to determine reconstructed picture information of the coding unit.

S808: Fuse the reconstructed picture information of the coding unit and reconstructed picture information of a reference unit based on the preset parameter, to obtain a target reconstructed picture of the coding unit.

For example, for S805 to S808, refer to the descriptions of S404 to S406. Details are not described herein again.

It should be noted that the decoded residual information of the coding unit in the embodiment of FIG. 8 corresponds to the second residual information of the coding unit in the embodiment of FIG. 2B.

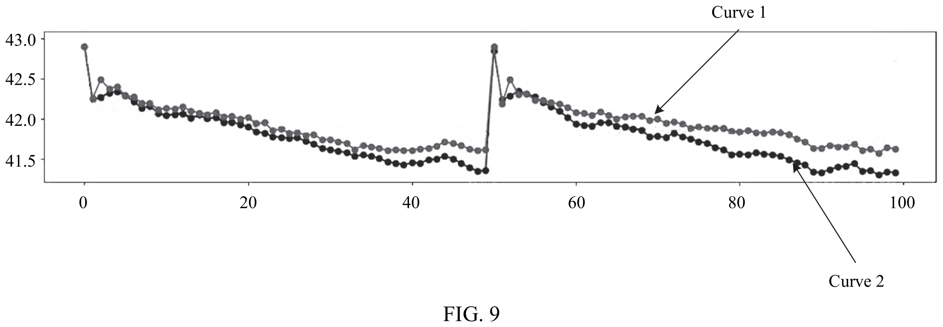

It should be understood that, on the basis of FIG. 3A, based on a preset parameter of a coding unit, adaptive bitrate encoding may be further performed on a first optical flow of the coding unit and adaptive bitrate encoding may be further performed on residual information of the coding unit. In this way, bitrate overheads can be further reduced. For details, refer to the descriptions in the embodiments of FIG. 5A and FIG. 7A. Details are not described herein again. In addition, on the basis of FIG. 4, based on a preset parameter of a coding unit, adaptive bitrate decoding is performed on an optical flow bitstream and adaptive bitrate decoding is performed on a residual bitstream. For details, refer to the descriptions in the embodiment of FIG. 6 and the embodiment of FIG. 8. Details are not described herein again. For reconstruction quality of reconstructed video data obtained in the video encoding method in which the embodiment of FIG. 5A and the embodiment of FIG. 7A are combined and the video decoding method in which the embodiment of FIG. 6 and the embodiment of FIG. 8 are combined, refer to FIG. 9.

FIG. 9 is a diagram of example test video reconstruction quality. In FIG. 9, a horizontal coordinate is a frame number of a picture frame, and a vertical coordinate is Y-PSNR. FIG. 9 shows Y-PNSR of each frame of picture in two groups of pictures (each group of pictures includes 50 frames of pictures).

As shown in FIG. 9, a curve 1 shows Y-PSNR of a reconstructed picture obtained through encoding/decoding in an AI video encoding/decoding method in this application, and a curve 2 shows Y-PSNR of a reconstructed picture obtained through encoding/decoding in an AI video encoding/decoding method in the conventional technology. It can be learned from a comparison between the curve 1 and the curve 2 that, compared with the conventional technology, in this application, the reconstructed picture has more stable quality, and a smaller accumulated error, namely, higher quality of the reconstructed picture.

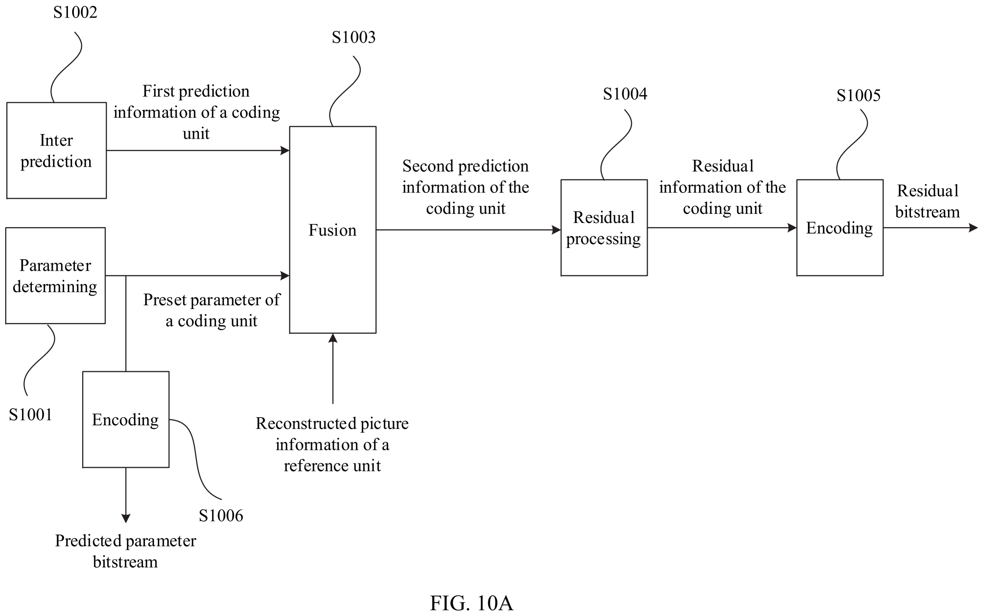

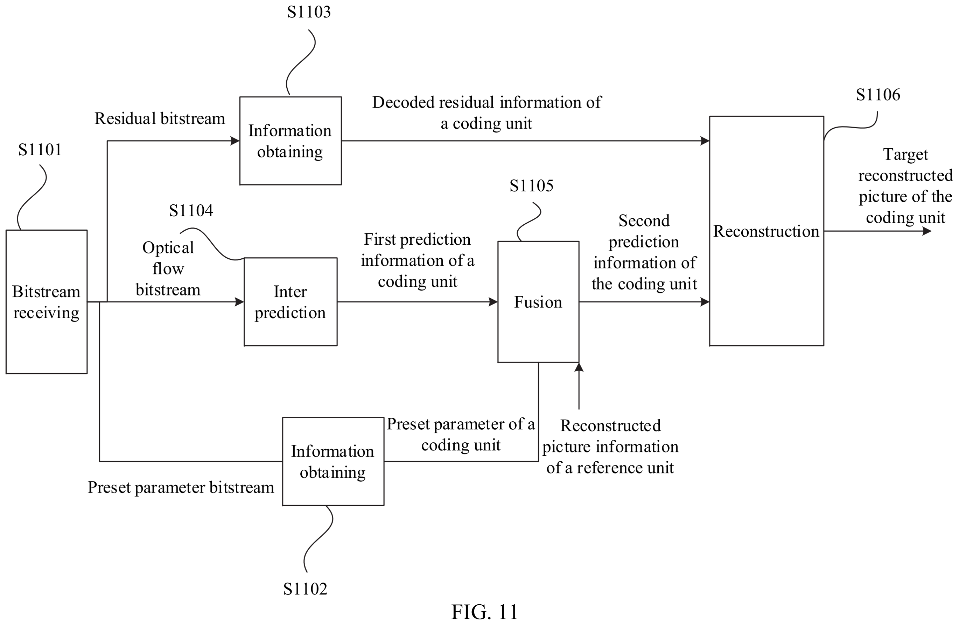

In the following embodiments of FIG. 10A and FIG. 11, on the basis of FIG. 2A, post-processing may be performed on first prediction information obtained through inter prediction, to reduce an accumulated error.

FIG. 10A is a diagram of an example encoding process.

S1001: Determine a preset parameter of a coding unit in a current frame.

For example, S1001 may be performed by a preset parameter determining module of an AI video encoding framework.

For example, the preset parameter of the coding unit may be determined based on an original picture of the coding unit and a picture of a reference unit. The picture of the reference unit includes an original picture of a reference unit in a reference frame and/or a target reconstructed picture of the reference unit. A specific process of determining the preset parameter of the coding unit is similar to the descriptions in S304. Details are not described herein again. A difference between S1001 and S304 lies in that, because S1001 is performed before inter prediction, information used to determine the preset parameter of the coding unit in S1001 does not include an initial reconstructed picture of the coding unit.

The preset parameter may be used to describe motion complexity of the original picture of the coding unit relative to the picture of the reference unit.

S1002: Perform inter prediction on the coding unit, to obtain first prediction information of the coding unit.

For example, for S1002, refer to the descriptions of S301. Details are not described herein again.

For example, S1002 may be performed by an inter prediction module in the AI video encoding framework. The inter prediction module may include a motion estimation module, an optical flow processing module (including an optical flow encoding module and an optical flow decoding module), a first entropy estimation module, and a prediction module in FIG. 3A.

S1003: Fusing the first prediction information and reconstructed picture information of the reference unit based on the preset parameter, to obtain second prediction information of the coding unit.

For example, S1003 may be performed by a fusion module in the AI video encoding framework. The fusion module may be an independent module, or may be integrated into a reconstruction module. This is not limited in this application.

For example, a manner of fusing the reconstructed picture information of the reference unit and the first prediction information of the coding unit to obtain the second prediction information of the coding unit may be as follows: determining a weight of the reconstructed picture information of the reference unit and a weight of the first prediction information of the coding unit based on the preset parameter; and performing weighting calculation on the reconstructed picture information of the reference unit and the first prediction information of the coding unit based on the weight of the reconstructed picture information of the reference unit and the weight of the first prediction information of the coding unit, to obtain the second prediction information of the coding unit.

In this case, if a first preset value is greater than a second preset value, when the first preset value and the second preset value are numbers between 0 and 1 (both the first preset value and the second preset value may be 0 or 1), a value of the preset parameter of the coding unit may be used as the weight of the reconstructed picture information of the reference unit, and a difference between 1 and the value of the preset parameter of the coding unit is used as the weight of the first prediction information of the coding unit. When the first preset value and the second preset value are numbers greater than 1, the first preset value and the second preset value may be converted into numbers between 0 and 1, a value that is of the preset parameter of the coding unit and that is obtained through conversion is used as the weight of the reconstructed picture information of the reference unit, and a difference between 1 and the value that is of the preset parameter of the coding unit and that is obtained through conversion is used as the weight of the first prediction information of the coding unit. In this case, fusion may be performed based on Formula (8):

$$H1 = mask * P + (1 - mask) * H2 \qquad (8)$$

If the second preset value is greater than the first preset value, fusion may be performed based on Formula (9):

$$H1 = mask * H2 + (1 - mask) * P \qquad (9)$$

In Formula (8) and Formula (9), $H1$ represents the second prediction information of the coding unit, $P$ is the target reconstructed picture of the reference unit or feature information of the target reconstructed picture of the reference unit, and $H2$ is the first prediction information of the coding unit.

When the motion complexity of the original picture of the coding unit relative to the picture of the reference unit is low complexity, mask in Formula (8) is 1, and mask in Formula (9) is 0, fusing the first prediction information of the coding unit and the reconstructed picture information of the reference unit may be as follows: copying the reconstructed picture information of the reference unit to the coding unit, to obtain the second prediction information of the coding unit. In this way, accuracy of inter prediction can be improved, thereby reducing an error introduced by inter prediction, and an error in the current frame is reduced, thereby reducing an accumulated error in a subsequent frame, and ensuring time sequence stability.

When the motion complexity of the original picture of the coding unit relative to the picture of the reference unit is high complexity, mask in Formula (8) is 0, and mask in Formula (9) is 1, the second prediction information that is of the coding unit and that is obtained by fusing the first prediction information of the coding unit and the reconstructed picture information of the reference unit is essentially the first prediction information of the coding unit. Because the motion complexity of the original picture of the coding unit relative to the picture of the reference unit is high complexity, if the reconstructed picture information of the reference unit is copied to the coding unit, accuracy of the obtained second prediction information of the coding unit is low. Therefore, the first prediction information that is of the coding unit and that is obtained through inter prediction may be used as the second prediction information of the coding unit. In this way, accuracy of inter prediction can be ensured, and quality of the target reconstructed picture of the coding unit is ensured.

When the motion complexity of the original picture of the coding unit relative to the picture of the reference unit is low complexity, and mask in Formula (8) and Formula (9) is another value other than 0 and 1 (in other words, the first preset value and the second preset value are values other than 0 and 1), in the second prediction information that is of the coding unit and that is obtained by fusing the first prediction information of the coding unit and the reconstructed picture information of the reference unit, the first prediction information of the coding unit and the reconstructed picture information of the reference unit each account for a specific proportion. In this way, accuracy of inter prediction can be improved to some extent, and an error in the current frame is reduced, thereby reducing an accumulated error in a subsequent frame to some extent, and ensuring time sequence stability. In addition, quality of the target reconstructed picture of the coding unit can be further ensured to some extent.

For example, a manner of fusing the reconstructed picture information of the reference unit and the first prediction information to obtain the second prediction information of the coding unit may be as follows: inputting the preset parameter of the coding unit, the first prediction information of the coding unit, and the reconstructed picture information of the

EP 4 697 708 A1

reference unit into a fusion model (which is different from the fusion model in the embodiment of FIG. 3A), to obtain the second prediction information of the coding unit. In this case, the first preset value and the second preset value are not limited. The fusion model is pre-trained, and has a capability of generating more accurate prediction information. In this way, the error in the coding unit in the current frame can be reduced, thereby reducing the accumulated error in the subsequent frame, and ensuring the time sequence stability.

S1004: Determine residual information of the coding unit based on the second prediction information and the original picture of the coding unit.

For example, S1104 may be performed by a residual encoding module in the AI video encoding framework. For details, refer to the descriptions in the embodiment of FIG. 2A. Details are not described herein again. It should be noted that the residual information that is of the coding unit and that is determined in S1104 corresponds to the first residual information of the coding unit in the embodiment of FIG. 2A.

S1005: Encode the residual information of the coding unit.

For example, S1005 may be performed by the foregoing second entropy encoding module, to obtain a residual bitstream. Details are not described herein again. It should be noted that the residual information of the coding unit in S1005 corresponds to the first residual information of the coding unit in the embodiment of FIG. 2A.

S1006: Encode the preset parameter of the coding unit.

For example, for S1006, refer to the descriptions of S305 in the foregoing embodiments. Details are not described herein again.

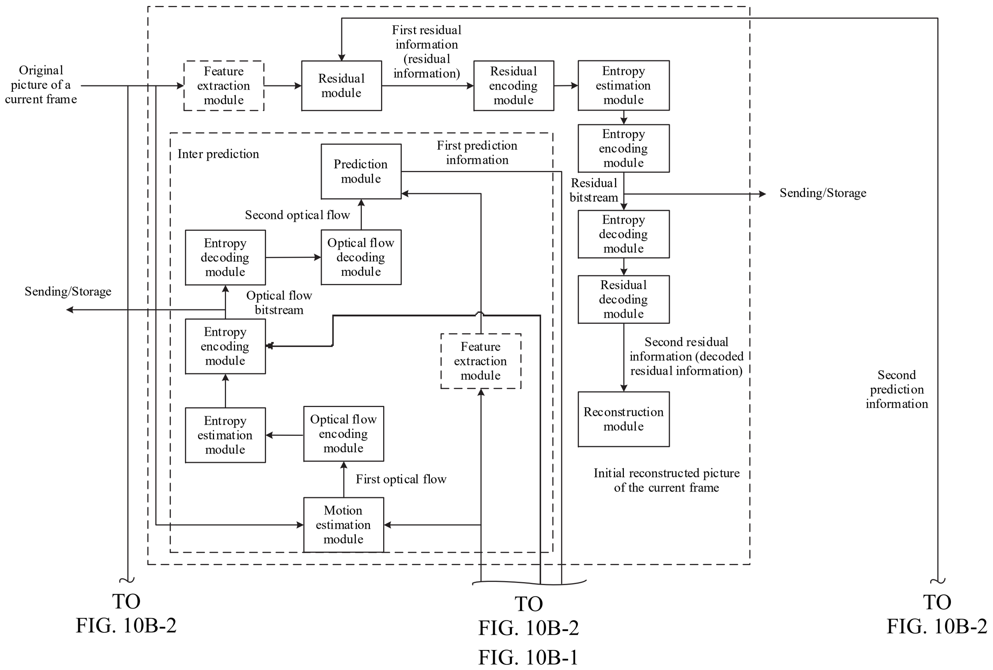

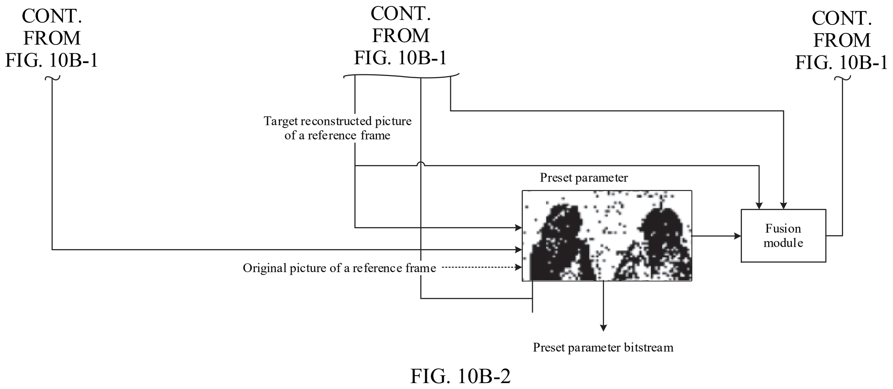

FIG. 10B is a diagram of an example encoding process. FIG. 10B is described by using a current frame as an example. In FIG. 10B, a first preset value is 1, a second preset value is 0, and reconstructed picture information of a reference unit used for fusion is a target reconstructed picture of the reference frame.

As shown in FIG. 10B, for example, an encoding process in a dashed box in a thick line on an upper left side corresponds to S1002 and S1004 to S1006. For details, refer to descriptions in FIG. 2A. Details are not described herein again. A processing process in a dashed box in a thick line on a lower right side may correspond to steps S1001 and S1003. In a preset parameter of the current frame in FIG. 10B, a black point indicates that the corresponding value of the preset parameter of the coding unit is 0, and a white point indicates that the corresponding value of the preset parameter of the coding unit is 1.

FIG. 11 is a diagram of an example decoding process. The decoding process in FIG. 11 corresponds to the decoding process in FIG. 10A.

S1101: Receive a bitstream.

S1102: Obtain a preset parameter of a coding unit based on the bitstream.

S1103: Obtain decoded residual information of the coding unit in the current frame based on the bitstream.

S1104: Perform inter prediction on the coding unit, to obtain first prediction information of the coding unit.

For example, for S1101 to S1104, refer to the descriptions of S401 to S404. Details are not described herein again.

It should be noted that the decoded residual information of the coding unit in S1103 corresponds to the second residual information of the coding unit in the embodiment of FIG. 2B.

It should be noted that S1102 and S1103 may be performed by a decoding module in an AI video decoding framework. The decoding module may include the second entropy estimation module, the second entropy decoding module, and the residual decoding module (the three modules are configured to perform S1103) in FIG. 2B, and further include a third entropy decoding module (the third entropy decoding module is an entropy decoding module in an AI video decoding framework, and the third entropy decoding module is configured to perform S1102).

S1105: Fusing the first prediction information and reconstructed picture information of a reference unit based on the preset parameter, to obtain second prediction information of the coding unit.

For example, a fusion process in S1105 is similar to the fusion process in S1003 in the embodiment of FIG. 10A. Details are not described herein again.

For example, the AI video decoding framework may include a fusion module, and S1005 may be performed by a fusion module in the AI video encoding framework. The fusion module may be an independent module, or may be integrated into a reconstruction module. This is not limited in this application.

S1106: Perform reconstruction based on the decoded residual information and the second prediction information, to determine a target reconstructed picture of the coding unit.

For example, for S1106, refer to the descriptions of the reconstruction process in the embodiment of FIG. 2B. Details are not described herein again.

It should be noted that the decoded residual information in the embodiment of FIG. 11 corresponds to the second residual information in the embodiment of FIG. 2B.

It should be understood that, in an encoding/decoding process, the following two fusion steps may be simultaneously performed: fusing first prediction information and reconstructed picture information of a reference unit based on a preset parameter of a coding unit, to obtain second prediction information of the coding unit; and fusing the reconstructed picture information of the reference unit and reconstructed picture information of the coding unit based on the preset parameter of the coding unit, to obtain a target reconstructed picture of the coding unit. That is, encoding is performed with reference to the embodiment of FIG. 10A and the embodiment of FIG. 3A, and decoding is performed with reference to the embodiment of FIG. 11 and the embodiment of FIG. 4A. In this way, an accumulated error can be further reduced.

It should be understood that, on the basis of the embodiment of FIG. 10A, adaptive bitrate encoding may be further performed on residual information of the coding unit based on the preset parameter of the coding unit, to reduce bitrate overheads.

It should be understood that, on the basis of FIG. 10A, adaptive bitrate encoding may be further performed on a first optical flow of the coding unit based on the preset parameter of the coding unit, to reduce bitrate overheads.

It should be understood that, on the basis of FIG. 10A, based on the preset parameter of the coding unit, adaptive bitrate encoding may be further performed on the residual information of the coding unit and adaptive bitrate encoding may be performed on the first optical flow of the coding unit. In this way, bitrate overheads are reduced.

It should be understood that, the embodiment of FIG. 10A may be further combined with the embodiment of FIG. 5A, and the embodiment of FIG. 11 may be further combined with the embodiment of FIG. 6, to further reduce the accumulated error and reduce bitrate overheads.

It should be understood that, the embodiment of FIG. 10A may be further combined with the embodiment of FIG. 7A, and the embodiment of FIG. 11 may be further combined with the embodiment of FIG. 8, to further reduce the accumulated error and reduce bitrate overheads.

It should be understood that, the embodiment of FIG. 10A, the embodiment of FIG. 5A, and the embodiment of FIG. 7A may be further combined, and the embodiment of FIG. 11, the embodiment of FIG. 6, and the embodiment of FIG. 8 may be combined, to further reduce the accumulated error and reduce bitrate overheads.

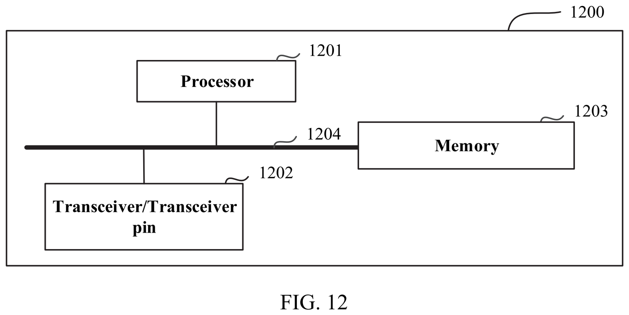

In an example, FIG. 12 is a block diagram of an apparatus 1200 according to an embodiment of this application. The apparatus 1200 may include a processor 1201 and a transceiver/transceiver pin 1202, and optionally further includes a memory 1203.

Components of the apparatus 1200 are coupled together through a bus 1204. In addition to a data bus, the bus 1204 further includes a power bus, a control bus, and a status signal bus. However, for clarity of description, various buses are referred to as the bus 1204 in the figure.

Optionally, the memory 1203 may be configured to store instructions in the foregoing method embodiments. The processor 1201 may be configured to execute the instructions in the memory 1203, control a receive pin to receive a signal, and control a transmit pin to send a signal.

The apparatus 1200 may be an electronic device (for example, an encoding apparatus, a decoding apparatus, or a decoding apparatus) or a chip of the electronic device in the foregoing method embodiments.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data through the one or more interface circuits. When the one or more processors execute computer instructions, the foregoing related method steps are performed to implement the method in the foregoing embodiments. The interface circuit is a transceiver/transceiver pin 1202.

An embodiment further provides a computer-readable storage medium. The computer-readable storage medium stores computer instructions. When the computer instructions are run on an electronic device, the electronic device is enabled to perform the foregoing related method steps, to implement the methods in the foregoing embodiments.

An embodiment further provides a computer program product. The computer program product includes computer instructions, and when the computer instructions are executed by a computer or a processor, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiments.

The electronic device, the computer-readable storage medium, the computer program product, or the chip provided in embodiments is configured to perform the corresponding method provided above. Therefore, for beneficial effect that can be achieved, refer to beneficial effect in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented according to requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical functional division and may be other division in actual implementations. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on an actual requirement, to achieve the objectives of the solutions of embodiments..

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. An encoding method, wherein the method comprises:

    performing inter prediction on a coding unit in a current frame, to obtain first prediction information of the coding unit;
    determining residual information of the coding unit based on the first prediction information and an original picture of the coding unit;

determining a preset parameter of the coding unit, wherein the preset parameter is used to fuse reconstructed picture information of a reference unit and reconstructed picture information of the coding unit, to obtain a target reconstructed picture of the coding unit, the reconstructed picture information of the reference unit comprises a target reconstructed picture of the reference unit or feature information of the target reconstructed picture of the reference unit, the reconstructed picture information of the coding unit comprises an initial reconstructed picture of the coding unit or feature information of the initial reconstructed picture of the coding unit, the initial reconstructed picture of the coding unit and the feature information of the initial reconstructed picture of the coding unit are obtained through reconstruction based on the first prediction information and the residual information, and the reference unit is a unit in a reference frame corresponding to the current frame; and encoding the residual information, and encoding the preset parameter.

2. The method according to claim 1, wherein encoding the residual information comprises:
performing adaptive bitrate encoding on the residual information based on the preset parameter.

3. The method according to claim 1 or 2, wherein performing inter prediction on the coding unit in the current frame, to obtain the first prediction information of the coding unit comprises:

determining a first optical flow of the coding unit based on the original picture of the coding unit and the target reconstructed picture of the reference unit; and
determining the first prediction information based on the first optical flow and the reconstructed picture information of the reference unit; and
the method further comprises:
performing adaptive bitrate encoding on the first optical flow based on the preset parameter.

4. The method according to any one of claims 1 to 3, wherein determining the preset parameter of the coding unit comprises:

determining a similarity between a picture of the coding unit and a picture of the reference unit, wherein the picture of the coding unit comprises the original picture of the coding unit and/or the initial reconstructed picture of the coding unit, and the picture of the reference unit comprises an original picture of the reference unit and/or a target reconstructed picture of the reference unit; and
determining the preset parameter based on the similarity.

5. The method according to any one of claims 1 to 4, wherein fusing the reconstructed picture information of the reference unit and the reconstructed picture information of the coding unit, to obtain the target reconstructed picture of the coding unit comprises:

determining a weight of the reconstructed picture information of the reference unit and a weight of the reconstructed picture information of the coding unit based on the preset parameter; and
performing weighted calculation on the reconstructed picture information of the reference unit and the reconstructed picture information of the coding unit based on the weight of the reconstructed picture information of the reference unit and the weight of the reconstructed picture information of the coding unit, to obtain the target reconstructed picture of the coding unit.

6. The method according to any one of claims 1 to 4, wherein fusing the reconstructed picture information of the reference unit and the reconstructed picture information of the coding unit, to obtain the target reconstructed picture of the coding unit comprises:
inputting the preset parameter, the reconstructed picture information of the reference unit, and the reconstructed picture information of the coding unit into a fusion model, to obtain the target reconstructed picture of the coding unit.

7. The method according to claim 2, wherein performing adaptive bitrate encoding on the residual information based on the preset parameter comprises:

encoding the residual information based on a first bitrate parameter when a value of the preset parameter is a first preset value; or
encoding the residual information based on a second bitrate parameter when a value of the preset parameter is a second preset value, wherein
a target bitrate of a bitstream obtained by encoding the residual information based on the second bitrate parameter is greater than a target bitrate of a bitstream obtained by encoding the residual information based on the first bitrate parameter.

8. The method according to any one of claims 1 to 7, wherein encoding the preset parameter comprises:

performing entropy estimation based on at least one of the residual information or a second optical flow of the coding unit, to determine a probability distribution of the preset parameter, wherein the second optical flow is obtained based on a bitstream obtained by encoding the first optical flow; and
performing entropy encoding on the preset parameter based on the probability distribution of the preset parameter.

9. The method according to any one of claims 1 to 8, wherein the method further comprises:

fusing the first prediction information and the reconstructed picture information of the reference unit based on the preset parameter, to obtain second prediction information; and
determining the residual information of the coding unit based on the first prediction information and the original picture of the coding unit comprises:
determining the residual information of the coding unit based on the second prediction information and the original picture of the coding unit.

10. The method according to any one of claims 1 to 9, wherein the method is applied to an AI video encoding framework, and the AI video encoding framework comprises an inter prediction module, a residual encoding module, an entropy encoding module, a preset parameter determining module, and a fusion module;

the inter prediction module is configured to: perform inter prediction on the coding unit, to obtain the first prediction information; and output the first prediction information to the residual encoding module;
the residual encoding module is configured to: determine the residual information based on the first prediction information and the original picture of the coding unit, and output the residual information to the entropy encoding module;
the preset parameter determining module is configured to: determine the preset parameter, and output the preset parameter to the entropy encoding module and the fusion module;
the entropy encoding module is configured to encode the residual information and the preset parameter; and
the fusion module is configured to fuse the reconstructed picture information of the reference unit and the reconstructed picture information of the coding unit based on the preset parameter, to obtain the target reconstructed picture of the coding unit.

11. The method according to claim 10, wherein the inter prediction module comprises a motion estimation network, an optical flow processing module, and a prediction module;

the motion estimation network is configured to: perform motion estimation based on the original picture of the coding unit and the target reconstructed picture of the reference unit, to obtain the first optical flow of the coding unit; and output the first optical flow to the optical flow processing module;
the optical flow processing module is configured to: perform processing based on the first optical flow, to determine the second optical flow; and output the second optical flow to the prediction module; and
the prediction module is configured to perform prediction based on the reconstructed picture information of the reference unit and the second optical flow, to obtain the first prediction information.

12. A decoding method, wherein the method comprises:

receiving a bitstream;
obtaining decoded residual information of a coding unit in a current frame based on the bitstream, and obtaining a preset parameter of the coding unit based on the bitstream;
performing inter prediction on the coding unit, to obtain first prediction information of the coding unit;
performing reconstruction based on the decoded residual information and the first prediction information, to determine reconstructed picture information of the coding unit, wherein the reconstructed picture information of the coding unit comprises an initial reconstructed picture of the coding unit or feature information of the initial reconstructed picture of the coding unit; and
fusing the reconstructed picture information of the coding unit and reconstructed picture information of a reference unit based on the preset parameter, to obtain a target reconstructed picture of the coding unit, wherein the reconstructed picture information of the reference unit comprises a target reconstructed picture of the reference unit or feature information of the target reconstructed picture of the reference unit, and the reference unit is a unit in a reference frame corresponding to the current frame.

13. The method according to claim 12, wherein fusing the reconstructed picture information of the coding unit and the reconstructed picture information of the reference unit based on the preset parameter, to obtain the target reconstructed picture of the coding unit comprises:

determining a weight of the reconstructed picture information of the coding unit and a weight of the reconstructed picture information of the reference unit based on the preset parameter; and
performing weighted calculation on the reconstructed picture information of the coding unit and the reconstructed picture information of the reference unit based on the weight of the reconstructed picture information of the coding unit and the weight of the reconstructed picture information of the reference unit, to obtain the target reconstructed picture of the coding unit.

14. The method according to claim 12, wherein fusing the reconstructed picture information of the coding unit and the reconstructed picture information of the reference unit based on the preset parameter, to obtain the target reconstructed picture of the coding unit comprises:
inputting the preset parameter, the reconstructed picture information of the coding unit, and the reconstructed picture information of the reference unit into a fusion model, to obtain the target reconstructed picture of the coding unit.

15. The method according to any one of claims 12 to 14, wherein the bitstream comprises a preset parameter bitstream and an optical flow bitstream, and obtaining the preset parameter of the coding unit in the current frame based on the bitstream comprises:

performing entropy estimation based on at least one of the decoded residual information or a second optical flow of the coding unit, to determine a probability distribution of the preset parameter, wherein the second optical flow is obtained based on the optical flow bitstream; and
obtaining the preset parameter from the preset parameter bitstream through entropy decoding based on the probability distribution of the preset parameter.

16. The method according to any one of claims 12 to 15, wherein the bitstream comprises a residual bitstream, and obtaining the decoded residual information of the coding unit based on the bitstream comprises:

performing adaptive bitrate decoding on the residual bitstream based on the preset parameter; and
determining the decoded residual information of the coding unit based on information obtained by performing adaptive bitrate decoding on the residual bitstream.

17. The method according to any one of claims 12 to 16, wherein the bitstream comprises the optical flow bitstream, and the method further comprises:

performing adaptive bitrate decoding on the optical flow bitstream based on the preset parameter; and
determining a second optical flow of the coding unit based on information obtained by performing adaptive bitrate decoding on the optical flow bitstream.

18. The method according to any one of claims 12 to 17, wherein the method is applied to an AI video decoding framework, and the AI video decoding framework comprises a decoding module, an inter prediction module, a reconstruction module, and a fusion module;

the decoding module is configured to: obtain the preset parameter based on the bitstream, obtain the decoded residual information based on the bitstream, output the preset parameter to the fusion module, and output the decoded residual information to the reconstruction module;
the inter prediction module is configured to: perform inter prediction on the coding unit, to obtain the first prediction information; and output the first prediction information to the reconstruction module;
the reconstruction module is configured to: perform reconstruction based on the decoded residual information and the first prediction information, to determine the reconstructed picture information of the coding unit; and output the reconstructed picture information of the coding unit to the fusion module; and

the fusion module is configured to fuse the reconstructed picture information of the coding unit and the reconstructed picture information of the reference unit based on the preset parameter, to obtain the target reconstructed picture of the coding unit.

19. An encoding method, wherein the method comprises:

determining a preset parameter of a coding unit in a current frame;
performing inter prediction on the coding unit, to obtain first prediction information of the coding unit;
fusing the first prediction information and reconstructed picture information of a reference unit based on the preset parameter, to obtain second prediction information of the coding unit, wherein the reconstructed picture information of the reference unit comprises a target reconstructed picture of the reference unit or feature information of the target reconstructed picture of the reference unit, and the reference unit is a unit in a reference frame corresponding to the current frame;
determining residual information of the coding unit based on the second prediction information and an original picture of the coding unit; and
encoding the residual information, and encoding the preset parameter.

20. The method according to claim 19, wherein encoding the residual information comprises:
performing adaptive bitrate encoding on the residual information based on the preset parameter.

21. The method according to claim 19 or 20, wherein performing inter prediction on the coding unit, to obtain the first prediction information of the coding unit comprises:

determining a first optical flow of the coding unit based on the original picture of the coding unit and the target reconstructed picture of the reference unit; and
determining the first prediction information based on the first optical flow and the reconstructed picture information of the reference unit; and
the method further comprises:
performing adaptive bitrate encoding on the first optical flow based on the preset parameter.

22. The method according to any one of claims 19 to 21, wherein the method further comprises:

fusing the reconstructed picture information of the reference unit and reconstructed picture information of the coding unit based on the preset parameter, to obtain a target reconstructed picture of the coding unit, wherein the reconstructed picture information of the coding unit comprises an initial reconstructed picture of the coding unit or feature information of the initial reconstructed picture of the coding unit, and the initial reconstructed picture of the coding unit and the feature information of the initial reconstructed picture of the coding unit are obtained through reconstruction based on the second prediction information and the residual information.

23. The method according to any one of claims 19 to 22, wherein the method is applied to an AI video encoding framework, and the AI video encoding framework comprises an inter prediction module, a residual encoding module, an entropy encoding module, a preset parameter determining module, and a fusion module;

the preset parameter determining module is configured to: determine the preset parameter, and output the preset parameter to the fusion module and the entropy encoding module;
the inter prediction module is configured to perform inter prediction on the coding unit, to obtain the first prediction information; and output the first prediction information to the fusion module;
the fusion module is configured to: fuse the first prediction information and the reconstructed picture information of the reference unit based on the preset parameter, to obtain the second prediction information; and output the second prediction information to the residual encoding module;
the residual encoding module is configured to: determine the residual information based on the second prediction information and the original picture of the coding unit, and output the residual information to the entropy encoding module; and
the entropy encoding module is configured to: encode the residual information, and encode the preset parameter.

24. A decoding method, wherein the method comprises:

receiving a bitstream;

obtaining decoded residual information of a coding unit in a current frame based on the bitstream, and obtaining a preset parameter of the coding unit based on the bitstream;

performing inter prediction on the coding unit, to obtain first prediction information of the coding unit;

fusing the first prediction information and reconstructed picture information of a reference unit based on the preset parameter, to obtain second prediction information of the coding unit, wherein the reconstructed picture information of the reference unit comprises a target reconstructed picture of the reference unit or feature information of the target reconstructed picture of the reference unit, and the reference unit is a unit in a reference frame corresponding to the current frame; and

performing reconstruction based on the decoded residual information and the second prediction information, to determine reconstructed picture information of the coding unit, wherein the reconstructed picture information of the coding unit comprises an initial reconstructed picture of the coding unit or feature information of the initial reconstructed picture of the coding unit, and the feature information of the initial reconstructed picture of the coding unit is used to obtain the initial reconstructed picture of the coding unit.

25. The method according to claim 24, wherein the method further comprises:
fusing the reconstructed picture information of the coding unit and the reconstructed picture information of the reference unit based on the preset parameter, to obtain a target reconstructed picture of the coding unit.

26. The method according to claim 24 or 25, wherein the bitstream comprises a preset parameter bitstream and an optical flow bitstream, and obtaining the preset parameter of the coding unit based on the bitstream comprises:

performing entropy estimation based on at least one of the decoded residual information and a second optical flow of the coding unit, to determine a probability distribution of the preset parameter, wherein the second optical flow is obtained based on the optical flow bitstream; and

obtaining the preset parameter from the preset parameter bitstream through entropy decoding based on the probability distribution of the preset parameter.

27. The method according to any one of claims 24 to 26, wherein the method is applied to an AI video decoding framework, and the AI video decoding framework comprises a decoding module, an inter prediction module, a reconstruction module, and a fusion module;

the decoding module is configured to: obtain the decoded residual information based on the bitstream; obtain the preset parameter based on the bitstream; output the decoded residual information to the reconstruction module; and output the preset parameter to the fusion module;

the inter prediction module is configured to perform inter prediction on the coding unit, to obtain the first prediction information; and output the first prediction information to the fusion module;

the fusion module is configured to: fuse the first prediction information and the reconstructed picture information of the reference unit based on the preset parameter, to obtain the second prediction information; and output the second prediction information to the reconstruction module; and

the reconstruction module is configured to: perform reconstruction based on the decoded residual information and the second prediction information, to determine the reconstructed picture information of the coding unit.

28. An encoding apparatus, comprising:

a memory and a processor, wherein the memory is coupled to the processor; and

the memory stores program instructions, and when the program instructions are executed by the processor, the encoding apparatus is enabled to perform the method according to any one of claims 1 to 11 or any one of claims 19 to 23.

29. A decoding apparatus, comprising:

a memory and a processor, wherein the memory is coupled to the processor; and

the memory stores program instructions, and when the program instructions are executed by the processor, the decoding apparatus is enabled to perform the method according to any one of claims 12 to 18 or any one of claims 24 to 27.

30. A coding apparatus, comprising one or more interface circuits and one or more processors, wherein the one or more processors receive or send data through the one or more interface circuits, and when the one or more processors execute computer instructions, the steps of the method according to any one of claims 1 to 11 or any one of claims 19 to 23 are performed.

31. A coding apparatus, comprising one or more interface circuits and one or more processors, wherein the one or more processors receive or send data through the one or more interface circuits, and when the one or more processors execute computer instructions, the steps of the method according to any one of claims 12 to 18 or any one of claims 24 to 27 are performed.

32. A computer-readable storage medium, wherein the computer-readable storage medium stores a computer program, and when the computer program is run on a computer or a processor, the computer or the processor is enabled to perform the method according to any one of claims 1 to 27.

33. A computer program product, wherein the computer program product comprises computer instructions, and when the computer instructions are executed by a computer or a processor, the steps of the method according to any one of claims 1 to 27 are performed.

Video data

Reconstructed video data

Camera

AI video encoding framework

Bitstream

Storage/ Transmission

Bitstream

AI video decoding framework

FIG. 1A

Video data

Camera →

AI video encoding framework

| AI encoding module | → | Entropy encoding module |

→ File storage module

Compression process

File

Decompression process

AI decoding module ← Entropy decoding module ← File loading module

AI video decoding framework

Reconstructed video data

FIG. 1B

FIG. 1C

EP 4 697 708 A1

FIG. 2A

FIG. 2B

EP 4 697 708 A1

FIG. 3A

FIG. 3B

FIG. 3C-1

EP 4 697 708 A1

EP 4 697 708 A1

CONT.
FROM
FIG. 3C-1

CONT.
FROM
FIG. 3C-1

CONT.
FROM
FIG. 3C-1

Preset parameter

Fusion module

Original picture of a
reference frame

Encoding

Preset parameter bitstream

Target reconstructed picture
of the current frame

FIG. 3C-2

Original picture of a current frame

Feature extraction module

First prediction information

Inter prediction

Residual module

First residual information

Residual encoding module

Entropy estimation module

Entropy encoding module

Residual bitstream

Sending/Storage

Entropy decoding module

Residual decoding module

Second residual information

Reconstruction module

Initial reconstructed picture of the current frame

Feature information of an initial reconstructed picture of the current frame

Prediction module

Second optical flow

Optical flow decoding module

Feature information of the target reconstructed picture of the reference frame

Feature extraction module

Target reconstructed picture of a reference frame

Entropy decoding module

Optical flow bitstream

Entropy encoding module

Entropy estimation module

Optical flow encoding module

First optical flow

Motion estimation module

Sending/Storage

TO FIG. 3D-2

TO FIG. 3D-2

TO FIG. 3D-1

FIG. 3D-2

TO FIG. 3D-2

47

CONT.
FROM
FIG. 3D-1

CONT.
FROM
FIG. 3D-1

CONT.
FROM
FIG. 3D-1

Preset parameter

Fusion module

Original picture of a reference frame

Feature
information of a target
reconstructed picture of
the current frame

Preset parameter bitstream

Reconstruction
module

Target reconstructed
picture of the current frame

FIG. 3D-2

S401 — Bitstream receiving

S402 — Information obtaining

S403 — Information obtaining

S404 — Inter prediction

S405 — Reconstruction

S406 — Fusion

Residual bitstream

Optical flow bitstream

Preset parameter bitstream

Decoded residual information of a coding unit

First prediction information of a coding unit

Preset parameter of a coding unit

Reconstructed picture information of the coding unit

Reconstructed picture information of a reference unit

Target reconstructed picture of the coding unit

FIG. 4A

FIG. 4B

FIG. 4C

FIG. 5A

EP 4 697 708 A1

FIG. 5B-1

EP 4 697 708 A1

53

CONT.
FROM
FIG. 5B-1

CONT.
FROM
FIG. 5B-1

CONT.
FROM
FIG. 5B-1

Preset parameter

Original picture of a reference frame

Fusion module

Preset parameter bitstream

Target reconstructed
picture of the current frame

FIG. 5B-2

FIG. 6

EP 4 697 708 A1

FIG. 7A

EP 4 697 708 A1

FIG. 7B-1

CONT.
FROM
FIG. 7B-1

CONT.
FROM
FIG. 7B-1

CONT.
FROM
FIG. 7B-1

Preset parameter

Fusion module

Original picture of a reference frame - - - - - - - - →

Preset parameter bitstream

Target reconstructed picture
of the current frame

**FIG. 7B-2**

EP 4 697 708 A1

FIG. 8

FIG. 9

FIG. 10A

FIG. 10B-1

CONT.
FROM
FIG. 10B-1

CONT.
FROM
FIG. 10B-1

CONT.
FROM
FIG. 10B-1

Target reconstructed picture
of a reference frame

Preset parameter

Fusion
module

Original picture of a reference frame

Preset parameter bitstream

FIG. 10B-2

FIG. 11

FIG. 12

## INTERNATIONAL SEARCH REPORT

| International application No. |
| --- |
| **PCT/CN2024/087050** |

**A. CLASSIFICATION OF SUBJECT MATTER**

H04N 19/159(2014.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, DWPI, VEN, JPTXT, WOTXT, USTXT, IEEE, CNKI, 万方, WANFANG, 必应, BING, 谷歌学术, GOOGLE SCHOLAR, JVET: 编码, 解码, 帧间, 残差, 参考, 参照, 相似度, 差异, 预定值, 预设参数, 运动复杂度, 权值, 权重, 叠加, 合并, 合成, 融和, 融合, 组合, 减小, 降低, 误差, 修正, 预测信息, 预测样本, 预测值, 增强, 提高, 质量, 重建, encode, decode, inter, residual, reference, similarity, difference, predetermine, value, preset, parameter, motion, complexity, weight, merge, composition, fuse, combination, reduction, error, correction, prediction information, prediction sample, prediction value, enhancement, improvement, quality, reconstruction

**C. DOCUMENTS CONSIDERED TO BE RELEVANT**

| Category* | Citation of document, with indication, where appropriate, of the relevant passages | Relevant to claim No. |
| --- | --- | --- |
| A | CN 114513670 A (ZHEJIANG DAHUA TECHNOLOGY CO., LTD.) 17 May 2022 (2022-05-17) <br> description, paragraphs [0027]-[0103], and figures 1-15 | 1-33 |
| A | CN 113949872 A (HUAQIAO UNIVERSITY) 18 January 2022 (2022-01-18) <br> entire document | 1-33 |
| A | US 2022210402 A1 (TENCENT AMERICA LLC.) 30 June 2022 (2022-06-30) <br> entire document | 1-33 |
| A | JIN, Dengchao et al. "Deep Affine Motion Compensation Network for Inter Prediction in VVC" <br> *IEEE Transactions on Circuits and Systems for Video Technology*, <br> Vol. 32, No. 6, 24 August 2021 (2021-08-24), pages 3923-3933 <br> entire document | 1-33 |

☑ Further documents are listed in the continuation of Box C. ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **18 June 2024** | **20 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 697 708 A1

**INTERNATIONAL SEARCH REPORT**

| | International application No. |
|---|---|
| | **PCT/CN2024/087050** |

**C.     DOCUMENTS CONSIDERED TO BE RELEVANT**

| Category* | Citation of document, with indication, where appropriate, of the relevant passages | Relevant to claim No. |
|---|---|---|
| A | D. Ruiz Coll et al. "EE2-related: Reconstruction-Reordered TMP based on lineal filter model for screen content coding (RRTMP-LFM)" *JVET-AD0203-v1*, 17 April 2023 (2023-04-17), pages 1-4  entire document | 1-33 |

Form PCT/ISA/210 (second sheet) (July 2022)

**INTERNATIONAL SEARCH REPORT**
Information on patent family members

| International application No. |
| --- |
| **PCT/CN2024/087050** |

| Patent document cited in search report | | | Publication date (day/month/year) | Patent family member(s) | | | Publication date (day/month/year) |
| --- | --- | --- | --- | --- | --- | --- | --- |
| CN | 114513670 | A | 17 May 2022 | CN | 114513670 | B | 10 March 2023 |
| CN | 113949872 | A | 18 January 2022 | None | | | |
| US | 2022210402 | A1 | 30 June 2022 | JP | 2023521734 | A | 25 May 2023 |
| | | | | JP | 7416490 | B2 | 17 January 2024 |
| | | | | EP | 4107628 | A1 | 28 December 2022 |
| | | | | EP | 4107628 | A4 | 19 July 2023 |
| | | | | US | 11490078 | B2 | 01 November 2022 |
| | | | | US | 2023007240 | A1 | 05 January 2023 |
| | | | | KR | 20220162786 | A | 08 December 2022 |
| | | | | WO | 2022146509 | A1 | 07 July 2022 |

Form PCT/ISA/210 (patent family annex) (July 2022)

**EP 4 697 708 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311030599